(19) Europäisches Patentamt
European Patent Office
Office européen des brevets

(11) Publication number: 0 106 491 A2

# (12) EUROPEAN PATENT APPLICATION

(21) Application number: 83305173.3

(22) Date of filing: 06.09.83

(51) Int. Cl.³: C 07 C 69/675
C 07 C 103/38, C 07 C 103/44
C 08 G 18/36, C 08 G 18/32
C 08 G 63/06, C 08 G 18/42

(30) Priority: 07.09.82 US 415522
07.09.82 US 415718
07.09.82 US 415734

(43) Date of publication of application:
25.04.84 Bulletin 84/17

(84) Designated Contracting States:
AT BE CH DE FR GB IT LI NL SE

(71) Applicant: HENKEL CORPORATION
7900 West 78th Street
Minneapolis Minnesota 55435(US)

(72) Inventor: Peerman, Dwight Ellsworth
10201 Hillside Ln.
Minnetonka Minnesota 55343(US)

(72) Inventor: Rogier, Edgar Robert
16400 Hidden Valley Road
Minnetonka Minnesota 55343(US)

(74) Representative: Watkins, Arnold Jack et al,
European Patent Attorney Frank B. Dehn & Co. Imperial House 15-19 Kingsway
London WC2B 6UZ(GB)

## (54) Hydroxymethyl polyols.

(57) Non-gelling polyols and alkoxylated polyol derivatives, particularly useful in the manufacture of polyurethanes, are disclosed. The polyols of formula I

$$R\{X\{A\}_{\alpha}H]_{p} \qquad (I)$$

(wherein R represents a polyol, polyamine or aminoalcohol residue; p is an integer of from 2 to 6; each X, which may be the same or different, represents an oxygen or nitrogen atom or a group $>$NH; each α, which may be the same or different, is an integer of from 0 to 10, the sum of all α's being greater than 0; and
each A, which may the same or different, represents a group of formula $A_1$, $A_3$

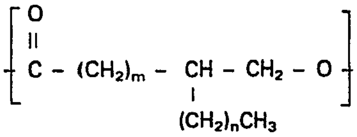

($A_1$)

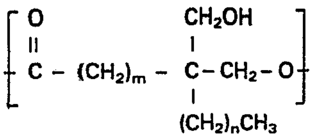

($A_3$)

[wherein m and n are integers; m is greater than 3; n is greater than or equal to 0; and the sum of m and n is from 11 to 19]
or $A_2$

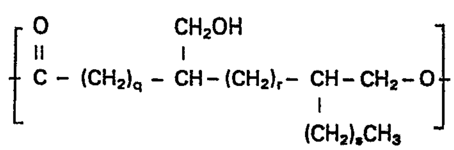

($A_2$)

[wherein q, r and s are integers; q is greater than 3; r and s, which may be the same or different, are each greater than or equal to 0; and the sum of q, r and s is from 10 to 18]; with the proviso that where each X represents an oxygen atom, p is 3, each A is $A_1$ and each α is 1, then R represents other than the residue of glycerol) are prepared by reacting a hydroxymethyl containing monomer compound with a polyol, polyamine or aminoalcohol.

EP 0 106 491 A2

7U142-622

# HYDROXYMETHYL POLYOLS

This invention relates to certain hydroxymethyl polyols and alkoxylated derivatives thereof which are useful, among other purposes, in the manufacture of urethane polymers, and to urethane polymers prepared therefrom.

It is known that polyols may be formulated from many materials. For instance the work of Hostettler, and Hostettler et al in United States Patent 2,933,477 issued April 19, 1960; United States Patent 2,962,524 issued November 29, 1960; and United States Patent 2,962,455 issued November 29, 1960, teaches that caprolactone may be utilized to form polyols which are then useful in the formation of other materials such as urethanes. However, the Hostettler, and Hostettler et al materials are solids and thus are of limited utility because they must be heated above their melting point in order to be capable of reacting effectively with other materials.

It is known from United States Patent 2,599,468 issued June 3, 1952 to McKeever that 9(10)hydroxymethyloctadecanol may be prepared. This material is normally a solid although it is sometimes found as a super cooled liquid. While this material might be useful for several purposes it is expensive to obtain in that the normal route of processing is from oleic acid. That is, while the hydroxymethyl formation through the oxo process may be conducted relatively simply on this material, there is difficulty and expense involved in converting the carboxylic group to an alcohol. DeWitt et al in United States Patent 3,242,414 issued March 29, 1966 discloses that electrically resistant materials may be formed from the alcohols described in the aforementioned McKeever patent. It is known that acrylic esters

of the materials of McKeever may be formulated through the disclosures of Offenlegungsschrift 2,200,021 published July 26, 1973 by Wegemund. It is also known from United States Patent 3,043,871 to Buchner et al issued July 10, 1962 that the diacid corresponding to the alcohol of McKeever may be formed.

The work of the United States Department of Agriculture at the Northern Regional Laboratory at Peoria, Illinois, had lead to the conversion of a number of unsaturated fatty compounds which may be further converted to useful materials. For instance, in United States Patent 3,787,459 issued January 22, 1974 to Frankel there are disclosed formyl derivatives of carboxylic acids. In United States Patent 3,928,231 issued December 23, 1975 to Frankel there is also disclosed the formation of polycarboxylic acids derived from fatty materials. In United States Patent 4,093,637 issued June 6, 1978 to Miller the use of esters of fatty derived materials as polyvinyl chloride plasticizers is disclosed. Esters of materials containing hydroxyl groups are described in United States Patent 4,083,816 issued April 11, 1978 to Frankel et al.

There are further disclosures of materials by the United States Department of Agriculture in a paper entitled "Carboxystearic Acid Esterification and Interchanges" dated November 11, 1971 by Dufek et al. A second publication of Dufek et al entitled "Some Esters of Mono- Di-and Tricarboxystearic Acid as Plasticizers; Preparation and Evaluation", Volume 53 JAOCS, p. 198, May 1976 discusses the uses of polycarboxylate esters. The formation of a hydroxymethyl triglyceride product of hydroformylation and hydrogenation of oleic safflower oil is referred to by Frankel et al in JAOCS Vol. 48, No. 5, p. 248 entitled "Methyl 9(10)-Formylstearate by Selective Hydroformylation of Oleic Oils". Hydroxymethyl

fatty alcohols are also described in the work of Frankel et al in JAOCS Vol. 52, 12, p. 498, 1975, entitled "Acyl Esters of Oxo-Derived Hydroxymethylstearates as Plasticizers for Polyvinyl Chloride".

It is also known from German Patent 934889 published November 10, 1955 that certain tricyclic esters may be formed. Similar work in this regard is found in European Patent Application Publication No. EP 49631A. Similar disclosures of polycyclic alcohols are found in Offenlegungsschrift 2,200,022 laid open for inspection July 19, 1973. Further disclosures of such materials are found in "Derivatives of Dicyclopentadiene - Valuable Key Compounds", Cornils et al published in Chemiker Zeitung 98, (2), 70-76, 1974.

An object of the present invention is to provide novel hydroxymethyl polyols of structure such that cross-linking, i.e. gelling is reduced or eliminated.

According to one aspect of the invention there are provided non-gelling polyols of formula I

$$R \left[ X \left( A \right)_{\alpha} H \right]_{p} \qquad (I)$$

(wherein

R represents a polyol, polyamine or aminoalcohol residue;

p is an integer of from 2 to 6;

each X, which may be the same or different, represents an oxygen or nitrogen atom or a group $>NH$;

each $\alpha$, which may be the same or different, is an integer of from 0 to 10, the sum of all $\alpha$'s being greater than 0; and

each A, which may be the same or different, represents a group of formula $A_1$, $A_3$

$$\left[ \overset{\overset{\large O}{\|}}{C} - (CH_2)_m - \underset{\underset{\large (CH_2)_nCH_3}{|}}{CH} - CH_2 - O \right] \qquad (A_1)$$

$$\left[ \overset{\overset{\large O}{\|}}{C} - (CH_2)_m - \overset{\overset{\large CH_2OH}{|}}{\underset{\underset{\large (CH_2)_nCH_3}{|}}{C}} - CH_2 - O \right] \qquad (A_3)$$

[wherein

m and n are integers;

m is greater than 3; n is greater than or equal to 0; and the sum of m and n is from 11 to 19]

or $A_2$

$$\left[ \overset{\overset{\large O}{\|}}{C} - (CH_2)_q - \overset{\overset{\large CH_2OH}{|}}{CH} - (CH_2)_r - \underset{\underset{\large (CH_2)_sCH_3}{|}}{CH} - CH_2 - O \right] \qquad (A_2)$$

[wherein q, r and s are integers; q is greater than 3; r and s, which may be the same or different, are each greater than or equal to 0; and the sum of q, r and s is from 10 to 18]; with the proviso that where each X represents an oxygen atom, p is 3, each A is $A_1$ and each $\alpha$ is 1, then R represents other than the residue of glycerol) and mixtures thereof.

In the compounds of formula I of the invention where any X represents a nitrogen atom the residue R may comprise discrete parts bonded together via X.

The compounds of formula I of the invention do not include the hydroxymethyl triglyceride product referred to by Frankel in the article appearing in JAOCS, No. 48, No. 5, pp 248-253, at 249 (1971) entitled "Methyl 9(10)-Formylstearate by Selective Hydroformylation of Oleic Oils". This product is referred to by Frankel as hydroxymethyl triglyceride

product produced by hydrogenation of hydroformylated oleic safflower oil (90.5% formylstearate). Accordingly, formula I above does not encompass compounds in which R is the residue of glycerol, each X is oxygen, p is 3, each A is $A_1$ and each α is 1. As the pertinent teachings of Frankel are limited to reactions conducted on oils of fatty acids to yield triglyceride products, they have no bearing on the polyol compounds of the invention. This fact will become more evident when the preparation of the compounds of formula I of the invention are described hereinafter.

The novel polyols of the invention are of controlled structure such that cross-linking, often referred to as gelling, does not occur. The resulting products are useful in the manufacture of urethanes.

In preparing the compounds of formula I of the invention, an A-B type hydroxy ester monomer such as methyl 9(10)-hydroxymethyloctadecanoate may be reacted with a multifunctional compound having at least two active hydrogens of the type $R(XH)_p$ where R, X and p are as defined above, e.g. polyols of formula $R(OH)_p$, poly-primary amines of formula $R(NH_2)_p$ and poly-secondary amines of formula $R(NH)_p$. The active hydrogens can also be present in compounds having both hydroxyl and amine groups, e.g., aminoalcohols.

According to a further aspect of the invention there is thus provided a process for the preparation of novel non-gelling polyols of formula I, which process comprises transesterifying a hydroxy ester monomer by reaction with a multifunctional compound having at least two active hydrogens, said multifunctional compound being of formula

$$R(XH)_p$$

(wherein X, R and p are as defined above) and said

hydroxy ester monomer being of formula X, XI or XII

$$R''' - \overset{O}{\overset{\|}{C}} - (CH_2)_m - \underset{(CH_2)_nCH_3}{\underset{|}{CH}} - CH_2 - O - H \qquad (X)$$

$$R''' - \overset{O}{\overset{\|}{C}} - (CH_2)_q - \overset{CH_2OH}{\overset{|}{CH}} - (CH_2)_r - \underset{(CH_2)_s-CH_3}{\underset{|}{CH}} - CH_2OH \qquad (XI) \text{ or}$$

$$R''' - \overset{O}{\overset{\|}{C}} - (CH_2)_m - \overset{CH_2OH}{\underset{(CH_2)_nCH_3}{\overset{|}{\underset{|}{C}}}} - CH_2 - OH \qquad (XII)$$

(wherein m, n, q, r and s are as defined above and R"' represents a displaceable leaving group capable of forming an alcohol R"'OH).

The reaction can be represented by the following equation, using a polyol as the source of active hydrogens:

$$j(A\text{-}B) + R(OH)_p \rightarrow R[O(B\text{-}A)_{j*}\text{-}H]_p$$

(where the sum of all j*'s is j). If A-B represents a hydroxy ester, HO-R"-$CO_2$R"', then the reaction becomes

$$j(HO\text{-}R''\text{-}CO_2R''') + R(OH)_p \rightarrow R[O(\overset{O}{\overset{\|}{C}}\text{-}R''\text{-}O)_{j*}H]_p + jR'''OH$$

The resulting multichain polyester polyols are composed of p chains and thus have a hydroxyl functionality of p which corresponds exactly with the functionality of the starting polyol $R(OH)_p$. Cross-linking is precluded since the terminal hydroxyl groups do not react with themselves under the reaction conditions. The average length j* of the chains is controlled

by the relative proportion of the hydroxy ester monomer to the multifunctional reactant and the extent of the condensation, which is generally carried to completion.

The reaction mechanism is the same when polyamines or aminoalcohols are employed as the sources of active hydrogens. Polyamines containing primary and secondary amines as well as combinations of primary and secondary amines function effectively to produce amide polyols.

The hydroxy ester monomer starting material is prepared by hydrogenation of hydroformylated unsaturated carboxylic acids or esters. The starting unsaturated acids are obtained most conveniently by splitting a triglyceride into its respective component fatty acids. Such sources of fatty acids which are unsaturated include tallow and most plant sources particularly soybean, sesame, sunflower, tall oil and other similar materials. For the purposes of processing, the starting fatty acids are conveniently obtained in the form of the methyl ester.

The introduction of the hydroxymethyl group can be readily accomplished by a hydroformylation process utilizing either cobalt or rhodium catalysts, followed by hydrogenation of the formyl group to obtain the hydroxymethyl group by catalytic methods or by chemical reduction. This procedure is described in detail in United States Patents 4,216,343, 4,216,344, 4,304,945, and 4,229,562 of Rogier and references discussed therein.

When a mono-unsaturated fatty acid ester is used as the starting material, a mono-hydroxymethyl ester of the following formula is obtained (using the methyl ester as an example):

$$CH_3 - O - \overset{\overset{O}{\|}}{C} - (CH_2)_m - \underset{\underset{(CH_2)_nCH_3}{|}}{CH} - CH_2OH$$

For most of the commonly available mono-unsaturated fatty acids, m > 3 and n is a value such that the sum of m and n is between 11 and 19. Thus, for example, the product obtained when the methyl ester of oleic acid is the starting material is 9(10) methyl hydroxymethyloctadecanoate of the formula:

$$CH_3 - O - \overset{\overset{O}{\|}}{C} - (CH_2)_m - \underset{\underset{(CH_2)_nCH_3}{|}}{CH} - CH_2OH$$

wherein

m is 8 or 7, and

n is 7 or 8.

The designation 9(10) in the name of this compound and the alternative designations for m and n in the formula indicate that the product is, in fact, a mixture of the 9 and 10 isomers with respect to the hydroxymethyl group, as a result of the alternative positioning of the formyl group in the hydroformylation process.

When a di-unsaturated fatty acid ester is selected as the starting material, a di-hydroxymethyl ester of the following formula is obtained via the rhodium catalyzed hydroformylation process (again using the methyl ester as an example):

$$CH_3 - O - \overset{\overset{O}{\|}}{C} - (CH_2)_q - \overset{\overset{CH_2OH}{|}}{CH} - (CH_2)_r - \underset{\underset{(CH_2)_sCH_3}{|}}{CH} - CH_2OH$$

For most commonly available di-unsaturated fatty acids, q will be >3, r and s will be zero or greater,

and the sum of q, r and s will be between 10 and 18, inclusive.

Thus, for example, if 9,12-linoleic acid ester is the starting material, the formylated ester will be a 9(10), 12(13) diformyloctadecanoate, that is, a mixture of the 9-12, 9-13, 10-12, 10-13 diformyl esters. When this mixture is hydrogenated the corresponding di-hydroxymethyloctadecanoates will be obtained.

A tri-unsaturated starting material will partially reduce giving a mixture of isomers. Without discussing all the particular isomers present when 9,12,15-linolenic acid ester is employed, the product will be a diformyl mixture of the 9(10), 12(13), and 15(16) isomers.

The hydroxymethyl monomer can also be prepared as a gem-bis(hydroxymethyl) ester of the formula (again using the methyl ester as an example):

$$CH_3 - O - \overset{O}{\overset{\|}{C}} - (CH_2)_m - \underset{(CH_2)_nCH_3}{\overset{CH_2OH}{C}} - CH_2OH$$

where

m and n are as previously defined.

The preparation of these gem-bis(hydroxymethyl) compounds follows the procedure disclosed in United States Patent 4,307,224 to Rogier, except that unsaturated esters as opposed to the unsaturated alcohol analogs are used as the starting material.

The multifunctional compounds containing at least two active hydrogens which are reacted with the hydroxymethyl compounds to obtain the polyols of formula I of the invention, may be generically identified by the formula:

$$R\,(XH)_p$$

where

X is O, N, or NH, and

p is 2 to 6.

In this formula, X may be the same in each moiety p or may differ in one or more moieties. The formula, therefore, encompasses polyols, polyamines containing primary and secondary amines and combinations of primary and secondary amines and aminoalcohols, i.e., compounds containing both hydroxy and amino groups. The component R then represents the residual portion of the compound. In this regard, it should be understood that when X represents N, so that the compound contains a secondary amino group, R represents both portions of the residual compound attached to the secondary amino group.

Polyols useful as the multifunctional compound include diols, triols, tetrols and even higher polyols. The choice of the polyol will depend upon the functionality desired in the product polyol of the invention.

Examples of useful diols include such materials as ethylene glycol, neopentylglycol, diols of the formula V

$$H(CH_2)_hCH(CH_2OH)(CH_2)_kCH_2OH \qquad (V)$$

where

k is $>3$; and

h + k are non-zero integers, the sum of which is from 12 to 20.

An example of such material is 9(10)-hydroxymethyloctadecanol. Additional diol materials which may be used in the present invention include 1,4-bishydroxymethylcyclohexane. Further diol materials include a compound of formula II

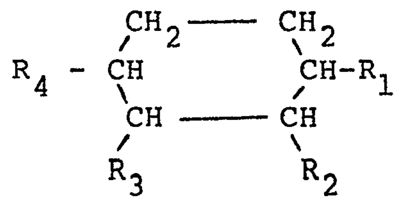

(II)

wherein $R_1$, $R_2$, $R_3$ and $R_4$, which may be the same or different, have a total of from 30 to 38 carbon atoms and each represent a straight-chained alkyl group having at least 5 carbon atoms, and wherein two of $R_1$, $R_2$, $R_3$ and $R_4$ have omega-hydroxyl substituents. Such later described materials are described in British Patent 1,043,507.

Further useful diols which may be utilized in the present invention include compounds of formulae III and IV

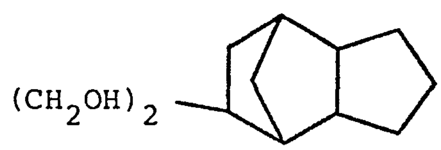

(III)

and

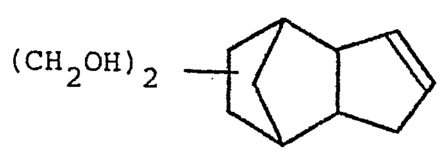

(IV)

and mixtures thereof.

Specific compounds within the scope of the foregoing formulae are 8,8-bis(hydroxymethyl)-tricyclo [5,2,1,$0^{2,6}$]decane and 8,8(9,9)-bis(hydroxymethyl)-tricyclo [5,2,1,$0^{2,6}$]decene.

Still further diol materials which may be used in the present invention include 2,5-hexanediol; 1,6-hexanediol; Dimerol alcohol, a 36 carbon diol

available from the Henkel Corporation; 1,4-cyclohexane diol; Polybd R-45HT, a butadiene diol having an approximate molecular weight of 2800; hydrogenated bisphenol A, and other similar materials. An additional diol which may be employed is the diol which is a member selected from the group consisting of 3(4),8(9)-bishydroxymethyl)-tricyclo[5,2,1,$0^{2,6}$]decane, i.e. a diol of formula VI

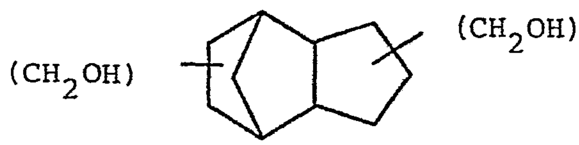

(VI)

Suitable triol materials include trimethylol propane and the triols disclosed in United States Patent 4,216,344 to Rogier. However, in some instances the presence of secondary hydroxyl groups can cause problems in the properties of the molecules such as sweating wherein the product appears to be wet and not fully cured. Therefore, as a practical matter, it is preferred that triols contain no secondary hydroxyl groups and/or contain more than 3 carbon atoms (so that any secondary hydroxyl group is not hindered by the close positioning of the primary hydroxyl groups within the molecule).

Further triols useful in the present invention include the triols described by Rogier in United States Patent 4,216,344. These include triols of formula VII

$$CH_3(CH_2)_a[C(CH_2OH)_2]_b(CH_2)_cC(CH_2OH)_2(CH_2)_d[C(CH_2OH)_2]_e(CH_2)_fCH_2OH \quad (VII)$$

(wherein a, b, c, d, e and f are integers the sum of which is from 11 to 19; b and e, which may be

the same or different, are 0 or 1; a and f are 3 or greater; and c and d are greater than 0).

A suitable example of such materials is 9,9(10,10)-bishydroxymethyloctadecanol.

It is further noted that it is possible to use triols in combinations with other polyols, a particularly valuable blend being that found described by Rogier in United States Patent 4,243,818. Additional examples of triols which may be employed include 1,2,6-hexanetriol and other similar materials.

Suitable tetrols include such materials as pentaerythritol. Suitable higher polyols include those pentols described in United States Patent 4,216,344 issued to Rogier.

Further polyols which are useful include materials from the work of Rogier in United States Patent 4348543 such as the compounds of formulae VIII and IX

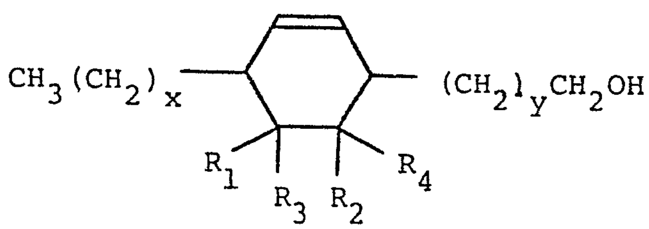

(VIII)

and

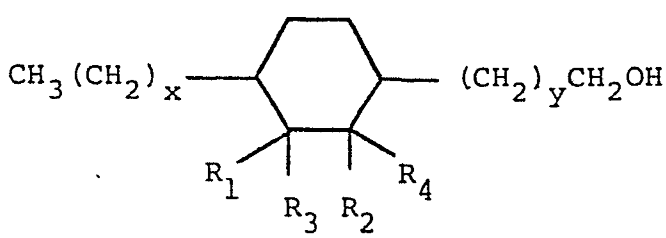

(IX)

(wherein one of $R_1$ and $R_2$ represents a hydrogen atom and the other represents a hydrogen atom or

a methyl group; one of $R_3$ and $R_4$ represents a hydroxymethyl group and the other represents a hydrogen atom or a hydroxymethyl group; x and y are integers the sum of which is 12; x is an integer of from 3 to 6; and y is an integer of from 6 to 9) and mixtures thereof.

Polyols suitable for use in preparing the compounds of formula I of the invention also include ester linked polyols and ether linked polyols such as tetramethylene glycol ethers. Similarly, diethylene glycol may be employed. It is also possible to use compounds containing both ester and ether linkages within the molecule, provided that at least two hydroxyl radicals remain. A preferred group of polyols within this class of linked polyols are the polyether polyols such as those prepared by condensing a polyol with at least one mole of alkylene oxide per mole of hydroxyl on the polyol, according to the reaction (using ethylene oxide for illustration):

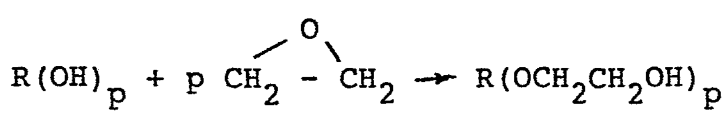

or

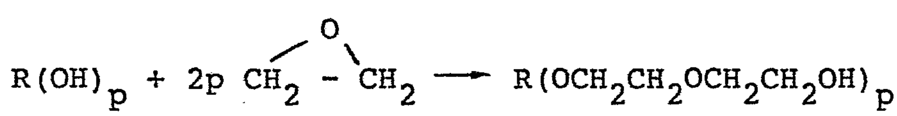

While ethylene oxide is the preferred alkoxylating agent for preparing ether polyols, other alkylene oxides, notably propylene oxide, may be used as well as mixtures of alkylene oxides, most notably mixtures of ethylene and propylene oxides.

Polyamine compounds which are useful in preparing amide polyols according to the invention may contain primary and secondary amine groups and combinations thereof provided that there are at least two amino groups. They may be linear or branched chain, cyclic or aromatic in structure. Such compounds include, but are not limited to, diamines such

as ethylene diamine, neopentyldiamine, 1,6-diaminohexane, bis-aminomethyltricyclodecane, bis-aminocyclohexane; triamines such as diethylene triamine; and tetramines such as triethylene tetramine.

Exemplary aminoalcohols which are useful in preparing polyols according to the invention are ethanolamine, diethanolamine and triethanolamine.

As discussed previously, the polyol compounds of formula I of the invention may be prepared by a transesterification reaction. The starting materials comprising the hydroxymethyl ester monomer and the multifunctional compound, i.e., polyol, polyamine or aminoalcohol, are mixed together in proportions which are selected to achieve the desired product. Mixtures of different multifunctional reactants as well as mixtures of different hydroxymethyl ester monomers may be used as the starting materials for the reaction. Mixed hydroxymethyl esters generally occur when the starting material is derived from naturally occurring fatty oils.

The temperature of the reaction mixture is gradually raised until an alkanol is generated. The particular alkanol produced will depend upon the alkyl moiety of the ester group. Thus, when the hydroxymethyl ester reactant is a methyl ester, methanol is generated. The alkanol is preferably drawn off from the reaction mixture to encourage a substantially complete reaction. Ideally, no more than a minor amount of the starting hydroxymethyl ester should remain in the end product as this material is mono-functional in reactions with polyisocyanates, and therefore acts as a chain terminating agent in the reaction to form polyurethanes. The product polyols of formula I of the invention are referred to as hydroxymethyl polyols since hydroxyl groups in the polyol exist as parts of hydroxymethyl moieties.

The optimum reaction temperature will vary depending upon the catalyst selected for the reaction, if any, and the reactivity of the reactants. Generally, reactions employing polyols as the multifunctional reactant are enhanced by the use of catalysts such as dibutyl tin oxide, butyltin tris(2-ethylhexoate), butylchlorotin dihydroxide, tetrabutyl orthotitanate, calcium acetate/antimony oxide and base catalysts such as sodium methoxide. Reactions involving polyamines as the multifunctional reactant do not generally require catalysts.

In the preparation of the products of formula I of this invention, it is important to avoid gellation, i.e., the formation of products of infinitely high viscosity and insolubility in all nondegrading solvents. Gellation can be avoided by limiting the extent of conversion or generally more preferably by using quantities of reactants far from the amounts required stoichiometrically. For a discussion of gellation see Flory, "Principles of Polymer Chemistry", Cornell University Press, 1953, p. 47, 347.

Alkoxylated derivatives of certain compounds of formula I have also been found to be particularly useful in the preparation of useful polyurethanes.

According to a further aspect of the invention there are thus provided alkoxylated derivatives of compounds of formula I'

$$R \{X (A)_{\alpha} H]_{p} \qquad (I')$$

(wherein R represents a polyol residue;

p is an integer of from 2 to 6;

each X represents an oxygen atom;

each $\alpha$, which may be the same or different, is an integer of from 0 to 10, the sum of all $\alpha$'s being greater than 0; and

each A, which may be the same or different, represents a group of formula $A_1$, $A_3$

$$\left[ \overset{\displaystyle O}{\overset{\|}{C}} - (CH_2)_m - \underset{\displaystyle (CH_2)_nCH_3}{\underset{|}{CH}} - CH_2 - O \right] \qquad (A_1)$$

$$\left[ \overset{\displaystyle O}{\overset{\|}{C}} - (CH_2)_m - \overset{\displaystyle CH_2OH}{\overset{|}{\underset{\displaystyle (CH_2)_nCH_3}{\underset{|}{C}}}} - CH_2 - O \right] \qquad (A_3)$$

[wherein

m and n are integers;

m is greater than 3; n is greater than or equal to 0; and the sum of m and n is from 11 to 19]

or $A_2$

$$\left[ \overset{\displaystyle O}{\overset{\|}{C}} - (CH_2)_q - \overset{\displaystyle CH_2OH}{\overset{|}{CH}} - (CH_2)_r - \underset{\displaystyle (CH_2)_sCH_3}{\underset{|}{CH}} - CH_2 - O \right] \qquad (A_2)$$

[wherein q, r and s are integers; q is greater than 3; r and s, which may be the same or different, are each greater than or equal to 0; and the sum of q, r and s is from 10 to 18]) and mixtures thereof formed by reacting at least one compound of formula I' with at least one alkylene oxide in a ratio of moles of alkylene oxide to equivalents of hydroxyl in the compound of formula I' of from about 0.5:1 to 5:1.

The alkoxylated derivatives of the invention have reactive hydroxyl groups which, when reacted with polyisocyanates, form polyurethanes.

According to a yet further aspect of the invention there is provided a process for the preparation of novel alkoxylated derivatives of compounds of formula I'

$$R \{X \{A\}_{\alpha} H]_{p} \qquad (I')$$

(wherein R represents a polyol residue;

p is an integer of from 2 to 6;

each X represents an oxygen atom;

each α, which may be the same or different, is an integer of from 0 to 10, the sum of all α's being greater than 0; and

each A, which may be the same or different, represents a group of formula $A_1$, $A_3$

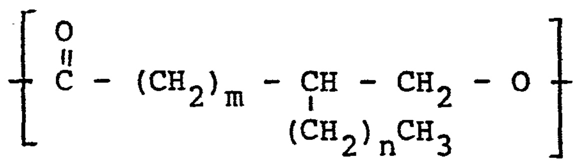

$(A_1)$

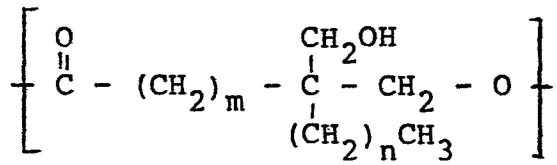

$(A_3)$

[wherein

m and n are integers;

m is greater than 3; n is greater than or equal to 0; and the sum of m and n is from 11 to 19]

or $A_2$

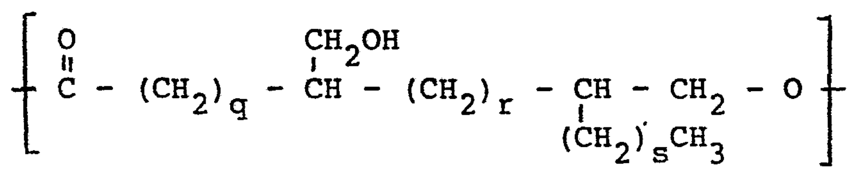

$(A_2)$

[wherein q, r and s are integers; q is greater than 3; r and s, which may be the same or different, are each greater than or equal to 0; and the sum of q, r and s is from 10 to 18]) and mixtures thereof, which process comprises reacting at least one compound of formula I' with at least one alkylene oxide in a ratio of moles of alkylene oxide to equivalents of hydroxyl in the compound of formula I' of from

about 0.5:1 to 5:1.

To form the alkoxylated derivatives of the invention, polyester polyols (of formula I') produced as previously described are reacted with alkoxylating compounds such as ethylene oxide, propylene oxide or mixtures of these compounds. The amount of alkoxylating compound required depends upon the hydroxyl functionality of the polyester polyol reactant and the degree of alkoxylation desired. Generally the amount of alkoxylating compound can be expressed as a ratio of moles of alkoxylating compound per hydroxyl equivalent in the polyester polyol. This ratio will generally fall within the range of 0.5:1 to 5:1, although ratios between 1:1 and 2:1, inclusive, are most preferred.

The reaction of the polyester polyol with alkylene oxide results in a statistically distributed yield of products, depending upon a number of factors including the ratio of moles of alkylene oxide to equivalents of hydroxyl in the polyester polyol. For example, when a polyester polyol formed from methyl hydroxymethyloctadecanoate and an initiating polyol is reacted with ethylene oxide, the reaction proceeds as follows:

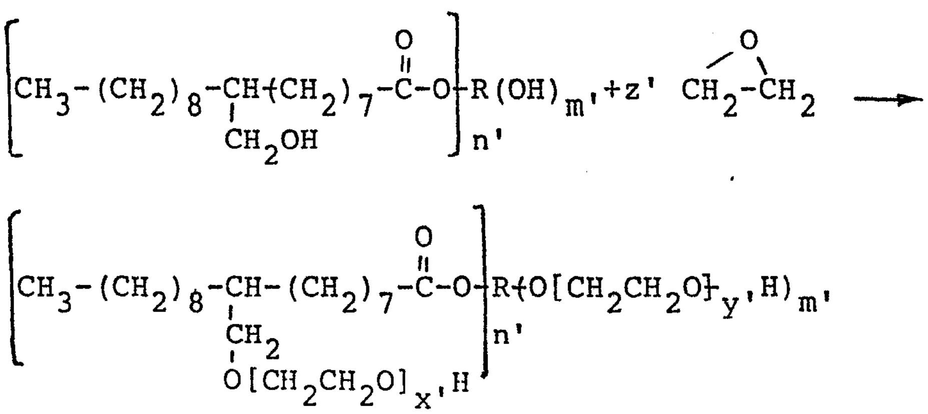

(where z' = n'.x' + m'.y').

In the case where n' and m' are both one and the ratio of equivalents of ethylene oxide to hydroxyl equivalents in the polyester polyol is 1:1, the principal ethyoxylated product will be that in

which both x' and y' are approximately one. This is because both primary hydroxyls in the polyester polyol are approximately equal in reactivity. Depending upon any inequality of reactivity between these two hydroxyl groups, the values of x' and y' will be slightly greater or slightly less than one, but the sum of x'+y' will be equal to two. Also, in a statistical minority of cases, two equivalents of ethylene oxide will react on one hydroxyl, thereby reducing the ethylene oxide on the other hydroxyl correspondingly, to produce, for example, a compound of the formula:

$$CH_3 - (CH_2)_8 - \underset{\displaystyle CH_2-CH_2OCH_2CH_2OH}{\underset{|}{CH}} - (CH_2)_7 - \overset{\displaystyle O}{\overset{\|}{C}} - O - R - OH$$

When n' and/or m' become greater than one, or where the ratio of ethylene oxide to hydroxyl equivalents is greater than one, the reaction becomes statistically more complex, although the underlying principles remain basically the same. Thus, it is evident that the reaction product of one or more polyester polyols and one or more alkoxylating compounds will be a mixture of alkoxylated compounds having varying degrees of alkoxylation.

The optimum reaction temperature for the alkoxylation reaction will vary depending upon the reactivity of the reactants. Typically, the reaction is conducted at temperatures exceeding 100°C and at elevated pressure. Catalysts are generally not required.

As previously noted, the polyols of formula I and the alkoxylated derivatives of the invention can react with polyisocyanates to produce useful polyurethanes. These polyurethanes have properties which make them attractive as elastomers, microcellular foams, protective coatings and adhesives.

Thus in a still further aspect, the invention provides the use of non-gelling polyols of formula I or alkoxylated derivatives of polyols of formula I' or mixtures thereof in the preparation of urethane linked reaction products by reaction with polyisocyanates.

According to a yet still further aspect of the invention there are provided urethane linked reaction products of at least one non-gelling polyol of formula I or an alkoxylated derivative according to the invention and from about 80% to about 120% on a hydroxyl-isocyanate equivalent basis of at least one polyisocyanate, such as an aromatic, aliphatic or cycloaliphatic polyisocyanate, and preferably a di- or tri- isocyanate or a mixture thereof.

According to a further aspect of the invention there is provided a process for the preparation of urethane linked reaction products which process comprises reacting at least one non-gelling polyol of formula I or an alkoxylated derivative according to the invention with from about 80% to about 120% on a hydroxyl-isocyanate equivalent basis of at least one polyisocyanate.

Suitable polyisocyanates include ethylene diisocyanate, trimethylene diisocyanate, hexamethylene diisocyanate, propylene-1,2-diisocyanate, ethylidene diisocyanate, cyclopentylene-1,3-diisocyanate, the 1,2-, 1,3- and 1,4-cyclohexylene diisocyanates, the 1,3- and 1,4-phenylene diisocyanates, diphenylmethane diisocyanates, polymethyleneisocyanates, the 2,4- and 2,6-toluene diisocyanates, the 1,3- and 1,4-xylylene diisocyanates, bis(4-isocyanatoethyl)carbonate, 1,8-diisocyanato-p-methane, 1-methyl-2,4-diisocyanato-cyclohexane, the chlorophenylene diisocyanates, naphthalene-1,5-diisocyanate, triphenylmethane-4,4'-triisocyanate, isopropylbenzene-alpha-4-diisocyanate, 5,6-bicyclo[2.2.1] hept-2-ene diisocyanate, 5,6-

diisocyanatobutylbicyclo[2.2.1] hept-2-ene and similar polyisocyanates.

Of particular interest in the present invention are trimethylhexamethylene diisocyanate available from VEBA, heptadecyl (C17) diisocyanate, DDI 1410 an aliphatic C-36 diisocyanate available from the Henkel Corporation of Minneapolis, Minnesota (generally such diisocyanates having from 12 to 40 carbons in the aliphatic radical may be used in the present invention). Further urethane components are isophorone diisocyanate available from VEBA and Desmodur N an aliphatic triisocyanate available from Mobay. Desmodur N is more particularly defined as the reaction product of 3 moles of hexamethylene diisocyanate and water having an isocyanate equivalent weight as later defined of 191. Other adducts or prepolymers of the polyisocyanate include Desmodur L and Mondur CB which are the adducts of toluene diisocyanate. The foregoing materials have an isocyanate equivalent weight of approximately 250.

The amount of the polyisocyanate utilized in forming the urethane compositions of the present invention is expressed on a percentage equivalent weight basis with respect to the hydroxyl functionality of the hydroxymethyl polyol. Desirably, each hydroxy functional group on the alcohol will react on a 1:1 stoichiometric basis with the isocyanate functionality on the polyisocyanate compound. It is quite feasible, however, to form the urethane linkage using from about 80% to 120% preferably from about 95% to 105% on a hydroxyl-isocyanate equivalent basis of the polyisocyanate to form the urethane product. The determination of the amount of polyisocyanate required for a given polyol reactant is readily made using hydroxyl or isocyanate equivalent weights as is well known to those of skill in the art. Mixtures of polyisocyanates and non-gelling polyols of formula I and/or alkoxylated derivatives

of polyols of formula I' may also be used in accordance with these parameters. Cross-linking polyurethanes are obtained whenever the hydroxyl functionality of the polyol reactant(s) is greater than two. Otherwise thermoplastic polyurethanes are produced.

To form the urethane reaction product, the polyol of the present invention and the organic polyisocyanate are mixed together in the proper proportions. When utilized as a coating the compounds are then quickly spread with a knife blade, brush or spray over the surface of the article to be coated. Where molded articles are desired various techniques such as casting, injection molding, reaction injection molding may be employed.

If desired, various urethane catalysts may be employed to promote the reaction. Examples of such urethane catalysts include trimethylene diamine, N-ethyl-morpholine, dimethyl piperazine, triethylamine, N,N,N',N'-tetramethylbutane-1,3-diamine, dibutyltin dilaurate, stannous octoate, stannous oleate, and stannous tallate, as well as other art recognized urethane catalysts. Typical levels of the urethane catalyst are from about 0.001% to about 5% by weight of the urethane components.

Trimethization catalysts such as diethylene diamine and $BF_3$ derivatives, can be included in the reaction mixture to convert the polyisocyanates to polyisocyanurates in situ and then to polyurethanes.

One or more additional polyols may be included in the reaction mixture to modify the properties of the resulting polyurethane, principally hardness and elasticity. Short chain polyols act as hard segment contributors to increase elastomer hardness while long chain polyols act as soft segment contributors to enhance the elastic properties of the elastomer. Such modifying polyols include alkyl or cycloalkyl polyols, ester linked polyols, ether linked polyols,

ether and ester linked polyols and hydroxy functional acrylic copolymers.

Specific examples of the alkyl and cycloalkyl polyols include 2,5-hexanediol, 1,6-hexanediol, ethylene glycol, glycerol, 1,2,6-hexanetriol, pentaerythritol, 1,4-cyclohexane diol, and 1,4-butanediol.

Examples of ester linked saturated polyols include Niax PCP0200 and PCP0240 both available from Union Carbide and having respective molecular weights of approximately 530 and 2000. Both of the foreging compounds are diols. Niax PCP0300 also available from Union Carbide is a caprolactone-ester triol having an approximate molecular weight of 540. Niax PCP0310 also available from Union Carbide is a caprolactone ester triol having a molecular weight of approximately 900.

The ether linked saturated polyols include compounds such as diethylene glycol and triethylene glycol both available from Fisher. Other ether linked saturated polyols include Teracol 1000 and 2000, available from Dupont. Further ether linked saturated polyols useful in the present invention include Polymeg Q0650, Q0100, and Q0200 all of which are ether diols available from Quaker having a respective molecular weight of approximately 650, 1000 and 2000. Pluracol P1010 having an approximate molecular weight of 1050 available from Wyandotte is an example of polypropylene oxide ether linked diol useful in the present invention. Similar Wyandotte products useful as saturated polyols in the present invention include Pluracol TP440 and 150 which are propylene oxide ether linked triols having respective molecular weights of approximately 425 and 1560. In similar fashion Pluracol GP3030 is another saturated polyol suitable for the present invention available from Wyandotte. The foregoing material is a glycerine polypropylene

ether linked triol having an approximate molecular weight of 2900.

Additional Pluracols useful in the present invention include Pluracol PEP450 which is a pentaerythritol polypropylene oxide ether linked tetrol having a molecular weight of 405 and Pluracol 493 an ether linked tetrol having a molecular weight of approximately 3630.

In addition, polyols having hydroxyl functionalities greater than 2.0 may be included in the reaction mixture as cross-linking agents. Suitable polyols for this purpose are disclosed in United States Patent 4,216,344, issued August 5, 1980 to Rogier. Additional materials which may be used as cross-linking agents are found in European patent application no. 82303188.5 filed on June 18, 1982 and published under serial No. EP 98335 A, a copy of which has been placed on the European Patent Office file of the instant application.

Numerous other modifying agents may be added to the polyurethanes of the invention to adapt the elastomer to particular uses. Thus, fillers such as carbon blacks, zinc oxide, titanium oxide and the like can be added. Plasticizers and dyes are other examples of suitable modifying agents.

Depending upon the viscosity of the reactants, they may be heated to enhance mixing. For convenience, the reactants may be heated to the temperature of reaction typically from about 0 to about 110°C, preferably from about room temperature, i.e., 22°C to about 85°C. The system is operated under a high vacuum to degas the reaction mixture for about 15 minutes. The reaction mixture is then cured for a time period of from about one to twenty-four hours depending upon the curing temperature and the particular polyurethane formed. Optimum curing cycles can be readily determined without undue experimentation by those of skill in the art.

Polyurethanes of the invention may also be prepared as isocyanate terminated pre-polymers by conducting the reaction with a substantial excess of polyisocyanate and not curing the reaction mixture. The pre-polymer provides an intermediate form of the polyurethane which is more convenient to handle than the individual reactants. By mixing the pre-polymer with additional polyol and curing, the pre-polymer is converted to a polyurethane resin.

Pre-polymers are particularly useful in making microcellular foam. The pre-polymer is mixed with polyol and a blowing agent and then poured into a mold which is heated to form microcellular polyurethane foam.

Polyurethanes prepared in accordance with the invention exhibit low water absorption, good retention of strength after exposure to hot water and good flexibility. They have utility in a wide range of aplications as elastomers, foams, protective coatings and adhesives. In addition, because one of the two principal reactants can be derived from naturally occurring fatty oils, the manufacturing process is efficient and economical.

Many of the hydroxymethyl polyols of formula I of the present invention are particularly valuable because they are liquid materials at room temperature. A functional analog is a polycaprolactone. However, polycaprolactones are solid or semi-solid at room temperature thus requiring heating. The products of the present invention are therefore particularly important for reaction injection molding (RIM) applications where the product is reacted within the mold after being furnished to the mixing chamber and thus to the mold in a liquid state. Accordingly, products of the present invention do not require extraneous heating sources along the feed lines to a RIM apparatus as do the caprolactone polyols. This leads to savings on the cost of energy and

equipment normally required to maintain urethane reactants in liquid or semi-solid form for reaction. It also eliminates the need for solvents which are often required to maintain the reaction medium liquid. Urethane products prepared from the polyols of the invention also exhibit strong hydrolytic stability.

To further illustrate various aspects of the invention, the following Examples are provided. However, it is to be understood that these Examples are purely illustrative and are in no way intended to limit the scope of the invention.

EXAMPLE 1

To 740 grams, 2.2 moles, of 9(10)-methylhydroxymethyloctadecanoate (referred to hereinafter as $C_{19}$ HME) were added 97.5 grams, 1.1 moles, of 1,4 butanediol. These reactants were heated to 85°C and a vacuum of 0.5 mm Hg was applied to degas the polyols. The vacuum was released after 30 minutes with nitrogen and 0.05 grams of tetrabutyl orthotitanate (9 ppm Ti) was added. Heat was gradually applied until methanol began to evolve at 167°C. Heating was continued at 170-180°C for 4 hours, 200°C for 3 hours. At this point analysis by gas chromatography indicated that less than 1% unreacted $C_{19}$HME remained based on the weight of the sample taken. Methanol remaining in the reaction was removed under vacuum at 85°C, stripping for about 50 minutes.

The equivalent weight of the resultant polyester polyol by hydroxyl analysis was 368 and the viscosity was 11.3 poise at 23°C.

EXAMPLE 2

To 660 grams, 1.97 moles, of $C_{19}$HME were added 62 grams, 1.0 mole, of ethylene glycol, and 0.12 grams of butyltin tris(2-ethylhexoate) (35 ppm Sn) was added. Heat was gradually applied until methanol began to evolve at 204°C. Heating was continued at 204°C for 4 hours, 215°C for 1½ hours. At this point analysis by gas chromatography indicated that very little unreacted $C_{19}$HME remained based on the weight of the sample taken. Methanol remaining in the reaction was removed under vacuum, stripping for about 50 minutes.

The equivalent weight of the resultant polyester polyol by hydroxyl analysis was 446 and the viscosity was 14.0 poise at 23°C.

EXAMPLE 3

To 205 grams, 0.6 mole, of $C_{19}$HME were added 119 grams, 0.6 mole, of bishydroxymethyl tricyclodecane. These reactants were heated to 140°C and a vacuum of 0.5 mm Hg was applied to degas the polyols. The vacuum was released after 15 minutes with nitrogen and 0.04 grams of butyltin tris (2-ethylhexoate) (24 ppm Sn) was added. Heat was gradually applied until methanol began to evolve at 186°C. Heating was continued at 200°C for 8½ hours. At this point analysis by gas chromatography indicated that less than 1% unreacted $C_{19}$HME remained based on the weight of the sample taken. Methanol remaining in the reaction was removed under vacuum at 180°C, stripping for about 35 minutes.

The equivalent weight of the resultant polyester polyol by hydroxyl analysis was 260 and the viscosity was 81.4 poise at 23°C.

EXAMPLE 4

To 205 grams, 0.6 mole, of $C_{19}$HME were added 182.4 grams, 0.6 mole, of 9(10)-hydroxymethyloctadecanol (hereinafter referred to as $C_{19}$Diol). These reactants were heated up to 100°C and a vacuum of 0.5 mm Hg was applied to degas the polyols. The vacuum was released after 30 minutes with nitrogen and 0.06 grams of butyltin tris (2-ethylhexoate) (30 ppm Sn) was added. Heat was gradually applied until methanol began to evolve at 200°C. Heating was continued at 200°C for 5 hours. At this point analysis by gas chromatography indicated that less than 1% unreacted $C_{19}$ HME remained, based on the weight of the sample taken. Methanol remaining in the reaction was removed under vacuum at 100°C, stripping for about 30 minutes.

The equivalent weight of the resultant polyester polyol by hydroxyl analysis was 307 and the viscosity was 12.2 poise at 23°C.

EXAMPLE 5

To 409.8 grams, 1.2 moles, of $C_{19}$ HME were added 136.8 grams, 0.4 mole, of 9,9(10,10)-bis(hydroxymethyl)-octadecanol (hereinafter referred to as $C_{20}$ Triol). These reactants were heated 90-130°C and a vacuum of 0.5 mm Hg was applied to degas the polyols. The vacuum was released after 60 minutes with nitrogen and 0.08 grams of butyltin tris (2-ethylhexoate) (30 ppm Sn) was added. Heat was gradually applied until methanol began to evolve at 200°C. Heating was continued at 210°C for 5 hours. At this point analysis by gas chromatography indicated that very little unreacted $C_{19}$ HME remained, based on the weight of the sample taken. Methanol remaining in the reaction was removed under vacuum at 70-80°C, stripping for about 50 minutes.

The equivalent weight of the resultant polyester polyol by hydroxyl analysis was 429 and the viscosity was 30.7 poise at 23°C.

EXAMPLE 6

To 286.9 grams, 0.8 mole, of $C_{19}$HME were added 119.8 grams, 0.8 mole, of trimethylol propane, and 0.06 grams of butyltin tris (2-ethylhexoate) (31 ppm Sn) was added. Heat was gradually applied until methanol began to evolve at 205°C. Heating was continued at 212-228°C for 5 hours. Methanol remaining in the reaction was removed under vacuum at 210° down to 70°C for about 115 minutes.

The equivalent weight of the resultant polyester polyol by hydroxyl analysis was 151 and the viscosity was 28.9 poise at 23°C.

EXAMPLE 7

To 322.7 grams, 0.9 mole, of $C_{19}$HME were added 122.6 grams, 0.9 mole, of pentaerythritol, and 0.05 grams of butyl tin tris(2-ethylhexoate) (27 ppm Sn) was added. Heat was gradually applied until methanol began to evolve at 215°C. Heating was continued at 230-250°C for 5 hours. Methanol remaining in the reaction was removed under vacuum at 150°C, stripping for about 120 minutes.

The equivalent weight of the resultant polyester polyol by hydroxyl analysis was 219.3 and the viscosity was 46.6 poise at 23°C.

EXAMPLE 8

To 322.7 grams, 0.9 mole, of $C_{19}$HME were added 61.3 grams, 0.45 mole, of pentaerythritol, and 0.05 grams of butyltin tris (2-ethylhexoate) (32 ppm Sn) was added. Heat was gradually applied until methanol began to evolve at 220°C. Heating was continued at 220-245°C for 3¼ hours. Methanol remaining in the reaction was removed under vacuum for about 120 minutes. The product was stripped to remove solids.

The equivalent weight of the resultant polyester polyol by hydroxyl analysis was 294.7 and the viscosity was 36.2 poise at 23°C.

EXAMPLE 9

To 358.6 grams, 1.0 mole, of $C_{19}$HME were added 45.4 grams, 0.33 mole, of pentaerythritol, and 0.05 grams of butyltin tris (2-ethylhexoate) (31 ppm Sn) was added. Heat was gradually applied until methanol began to evolve at 250°C. Heating was continued at 250-260°C for 2½ hours. Methanol remaining in the reaction was removed under vacuum, stripping for about 120 minutes, and cooling from this reaction temperature. The product was filtered to remove solids.

The equivalent weight of the resultant polyester polyol by hydroxyl analysis was 366.7 and the viscosity was 22.9 poise at 23°C.

EXAMPLE 10

To 683.0 grams, 2.0 moles, of $C_{19}$HME were added 68.0 grams, 0.5 mole, of pentaerythritol, and 0.12 grams of butyltin tris (2-ethylhexoate) (33 ppm Sn) was added. Heat was gradually applied until methanol began to evolve at 200°C. Heating was continued at 200-220°C for 5 hours plus 235-255°C for 7 hours. No methanol remained because of this high reaction temperature. The product was filtered to remove solid material.

The equivalent weight of the resultant polyester polyol by hydroxyl analysis was 442.1 and the viscosity was 45.3 poise at 23°C.

EXAMPLE 11

The polyunsaturated methyl esters from sunflower fatty acids were hydroformylated and reduced to produce a product with about 70% methyl bis(hydroxymethyl)octadecanoate, about 28% methyl hydroxymethyl octadecanoate and a small residue of saturated methyl fatty esters. This product had a saponification equivalent weight of 409.8 and a hydroxy equivalent weight of 204.

These hydroxy methyl esters (1 mole by saponification equivalent weight) were reacted with 1.5 moles of 1,4 butane diol by heating for 7 hours at 185°C with stirring while distilling off the methanol evolved by transesterification. After the reaction was complete the excess diol was removed by heat at 120-164°C under a vacuum of 0.2-0.5 mm Hg. Analysis by gas chromatography showed the product to have 0.5% residual 1,4 butane diol and a trace of the starting hydroxymethyl ester.

The equivalent weight of the resultant polyester polyol by hydroxyl analysis was 264.2 and the viscosity was 68 poise at 23°C.

The hydroxyl functionality of the polyester polyol was greater than two.

EXAMPLE 12

To 335.8 grams, 1.0 mole, of $C_{19}$HME were added 30 grams, 0.5 mole, of freshly distilled ethylene diamine. The reaction was stirred in a vessel equipped with heating source and distillation take-off with a short vigreaux column. At 130°C distillate began to come over. Over a period of 1.5 hours the pot temperature was increased to 185°C where it was maintained for 3 hours. It was then raised to 200°C for an additional hour after which time 28 grams of distillate had been collected. The product was stripped at 70°C at 1 mm Hg for 1.5 hours.

The resulting hydroxy amide had a softening point of 40°C, a hydroxy equivalent weight of 322 and an amine number of 15. Its viscosity at 50°C was 17.5 poise.

EXAMPLE 13

Using similar equipment and technique as described in Example 12, 335.8 grams, 1.0 mole, of $C_{19}$HME was reacted with 97.4 grams, 0.5 mole, of bis(aminomethyl) tricycloadecane. The reactants were heated at 205°C for 1 hour, 225°C for 1 hour and 255°C for 1.5 hours before stripping at 70°C under 0.3 mm Hg vacuum for 1 hour. The total distillate collected was 35 grams.

The product was a viscous liquid of 5650 poise at 23°C and 212 poise at 50°C. The hydroxyl equivalent weight was 408 and the amine number was 15.

EXAMPLE 14

Using similar equipment and technique as in Examples 12 and 13, a hydroxy amide was prepared from $C_{19}$HME and anhydrous hexamethylene diamine in a molar ratio of 2:1, respectively.

This product had a hydroxyl equivalent weight of 390, an amine number of 6 and a viscosity at 50°C of 120 poise.

EXAMPLE 15

An amide having both hydroxy and amine functionality was prepared by reacting 1.0 mole of $C_{19}$HME with 1.0 mole (103.5 grams) of diethylene triamine for 3.5 hours at a temperature starting at 155°C and ending at 180°C. The reactants were stripped under 4 mm Hg vacuum at 100°C for 20 minutes.

The product had an amine number of 234 and a viscosity at 23°C of 67.3 poise.

EXAMPLE 16

An amide having both hydroxyl and amine functionality was prepared by reacting 1.0 mole of $C_{19}$HME with 1.0 mole (158 grams) of triethylene tetramine in a manner similar to that described in Example 15.

The product had an amine number of 318 and a viscosity at 23°C of 92.5 poise.

EXAMPLE 17

To 478.1 grams, 1.4 moles, of 9(10)-methylhydroxymethyloctadecanoate (referred to hereinafter as $C_{19}$HME) were added 139.6 grams, 0.7 mole, of bishydroxymethyl tricyclodecane (BHMTCD) and 0.12 grams of butyltin tris (2-ethylhexoate), (BTTEH), catalyst. The reactants were heated under $N_2$ to 202°C at which temperature methanol began to evolve and kept evolving for 4½ hours at which time the temperature in the reaction pot was 232°C. Analysis by gas chromatography showed that no $C_{19}$HME remained but some unreacted BHMTCD did remain. Analysis by gel permeation chromatography revealed that there was some ($C_{19}$HME)BHMTCD but that there was more $(C_{19}HME)_2$ BHMTCD and higher oligomers.

This product had a viscosity of 40 poises at 23°C and a hydroxyl equivalent weight of 455.

EXAMPLE 18

To 410 grams, 1.2 moles, of $C_{19}$HME were added 86.5 grams, 0.6 mole, of 1,4 cyclohexanedimethanol and 0.12 grams of butyltin tris (2-ethylhexoate). The reactants were degassed under vacuum at 95°C. After releasing the vacuum with $N_2$ the reactants were stirred and heated to 165°C at which temperature methanol began to evolve. Heating was continued for about 6 hours with the reaction pot temperature rising to as high as 200°C.

This product had a viscosity of 26.4 poises at 23°C and a hydroxyl equivalent weight of 406.

EXAMPLE 19

To 740 grams, 2.17 moles, of $C_{19}$HME were added 97.5 grams, 1.08 moles, of 1,4 butane diol (1,4 BD). The reactants were degassed at 85°C with stirring under vacuum for 30 minutes at which time 0.05 grams of tetrabutylorthotitanate was added. The reactants were heated for 1½ hours at 170°C while methanol evolved. Analysis by gas chromatography showed both 1,4 butane diol and $C_{19}$HME still in the reaction mix. Heating was continued further at temperatures up to 200°C for an additional 5 hours at which time $C_{19}$HME disappeared from the reaction.

The product had a viscosity of 11.3 poises at 23°C and a hydroxyl equivalent weight of 368. Analysis by gel permeation chromatography showed this product to have some ($C_{19}$HME)BD but much larger amounts of $(C_{19}HME)_2$ BD and high oligomers.

EXAMPLE 20

To 341.5 grams, 1.0 mole, of $C_{19}$HME were added 199.4 grams, 1.0 mole, of bishydroxymethyl tricyclodecane and .08 grams butyltin tris (2-ethylhexoate) catalyst. These reactants were heated to 200°C and held for two hours while methanol evolved. Another 0.04 grams of catalyst was added and heating at 200°C was continued another 5 hours.

The product had a viscosity of 74.8 poises at 23°C and a hydroxyl equivalent weight of 256.

## EXAMPLE 21

To 409.8 grams, 1.2 moles, of $C_{19}$HME were added 179.6 grams, 1.2 moles, of trimethylol propane. Butyltin tris (2-ethylhexoate) catalyst was added three times, 0.04 grams each time, to the reaction as it progressed. The reaction schedule was 1 hour 206-215°C, 2 hours 225-240°C, and 4½ hours at 235-255°C. The product was stripped of volatiles under vacuum at about 80°C.

The viscosity was 37.2 poises at 23°C. The hydroxyl equivalent weight was 157.

## EXAMPLE 22

To 683 grams, 2.0 moles, of $C_{19}$HME were added 68 grams, 0.5 moles, of pentaerythritol and 0.04 grams of butyltin tris (2-ethylhexoate) catalyst. The reaction was stirred and heated to 200°C for 3 hours. Another 0.04 grams catalyst was added. It was heated 208-235°C for 2½ hours and another 0.04 grams of catalyst was added as the rate of methanol evolution decreased. Final heating period was 3½ hours at 235-255°C. The hazy reaction product was filtered.

The viscosity was 45.3 poises at 23°C and the hydroxyl equivalent weight was 442.

## EXAMPLE 23

To 288.2 grams of the ester diol of Example 17 were added 2 grams of potassium hydroxide. Heating and stirring at 30-45 psi and temperatures of 120-145°C, ethylene oxide, two units per hydroxyl, 78.3 moles, was added intermittently over a four hour period until all had been reacted. The alkaline catalyst was neutralized with Amberlyst ion exchange resin and filtered. The hydroxyl equivalent weight was 455.

EXAMPLE 24

In a similar manner as in Example 23, the ester diol of Example 18 was ethoxylated to one unit of ethylene oxide per hydroxyl equivalent in the diol using potassium hydroxide catalyst.

This product had a hydroxyl equivalent weight of 446 and a viscosity of 35.5 poises at 23°C.

EXAMPLE 25

Using the procedure of Example 23 the ester diol of Example 19 was ethoxylated, adding one unit of ethylene oxide per hydroxyl equivalent present in the diol.

This product had a viscosity of 8 poises at 23°C and a hydroxy equivalent weight of 456.

EXAMPLE 26

Using a procedure similar to that of Example 23, the ester diol of Example 20 was ethoxylated, adding one unit of ethylene per hydroxyl of the diol.

This product had a viscosity of 35.5 poises at 23°C and a hydroxy equivalent weight of 446

EXAMPLE 27

Using a procedure similar to Example 23, the ester triol of Example 21 was reacted with ethylene oxide at a ratio of one mole of ethylene oxide per hydroxyl of the triol.

This product had a viscosity of 15 poises at 23°C and a hydroxyl equivalent weight of 185.3

EXAMPLE 28

Using a procedure similar to Example 23, the tetrol of Example 22 was reacted with ethylene oxide at a ratio of one mole of ethylene oxide per hydroxyl of the tetrol.

This product had a viscosity of 43.9 poises at 23°C and a hydroxyl equivalent weight of 602.

In Examples 29-53 the elastomer properties were determined in accordance with the following elastomer test procedures:

Tensile ultimate strength, ASTM D 412
Percentage Elongation, ASTM D 412
Split Tear, ASTM D 1938
Compression Set, ASTM D 395, Method B, Type 1
Water Absorption, ASTM D 570. 70°C $H_2O$, 24 hrs
Torsional Rigidity, $T_f$, $T_4$ ASTM D 1043

$T_f$ = temperature at which modulus in torsion reaches 45,000 psi (310.3 mPa)

$T_4$ = temperature at which modulus in torsion reaches 3333 psi (23.0 mPa)

Durometer Hardness, ASTM D 2240
Hydrolytic Stability SATRA Method, 14 psi (96.5 kPa), 120°C steam

EXAMPLE 29

The polyester polyol of Example 1 was used to prepare a thermoplastic polyurethane elastomer. It was blended with a polyol and reacted with diisocyanate as follows:

| | Equiv. | Grams |
|---|---|---|
| Polyester polyol | 0.22 | 80.9 |
| Modifying polyol 1,4 butanediol | 0.33 | 14.8 |
| Isonate 143L diisocyanate (a modified diphenylmethane diisocyanate (MDI) containing a high percentage of MDI and a lesser amount of polycarbodiimide adducts) | 0.564 | 82.0 |

The polyols were blended and degassed under vacuum at 70°C for 90 minutes. After cooling to 30°C vacuum was released and the diisocyanate was added. While blending under vacuum the exotherm of reaction raised the temperature to 35°C. After 1 minute it was poured into prepared molds and cured for 24 hours at 100°C. After curing the elastomer was conditioned for 7 days at 23°C and 50% relative humidity.

The elastomer had the following properties:

| | |
|---|---|
| Shore hardness | 55 D |
| Tensile strength, psi (mPa) | 3850 (26.5) |
| Elongation, % | 240 |
| Split tear, PI * (kN/m) | 326 (57.1) |
| Compression set, % | 66 |
| Water absorption, 24 hrs at 70°C, % | 0.29 |
| Hydrolytic stability, % retained tensile strength | 100 |
| Torsional Rigidity | |
| $T_f$ °C | -29.5 |
| $T_4$ °C | +36 |

(* the abbreviation "PI" stands for pounds per inch of thickness)

EXAMPLE 30

The polyester polyol of Example 2 was used to prepare a crosslinked polyurethane elastomer. It was blended with polyols and reacted with diisocyanate as follows:

| | Equiv. | Grams |
|---|---|---|
| Polyester polyol | 0.14 | 64.5 |
| Modifying polyol 1,4 butanediol | 0.12 | 5.2 |
| Modifying polyol $C_{19}$ Diol | 0.15 | 22.5 |
| Crosslinking polyol - $C_{20}$ Triol | 0.10 | 11.4 |
| Isonate 143L diisocyanate | 0.52 | 76.43 |

The polyols were blended and degassed under vacuum at 70°C for 30 minutes. After cooling to 32°C vacuum was released and the diisocyanate was added. While blending under vacuum the exotherm of reaction raised the temperature to 70°C. After 4 minutes it was poured into prepared molds and cured for 24 hours at 100°C. After curing the elastomer was conditioned for 7 days at 23°C and 50% relative humidity.

The elastomer had the following properties:

| | | |
|---|---|---|
| Shore hardness | 54 D | |
| Tensile strength, psi (mPa) | 3425 | (23.6) |
| Elongation, % | 145 | |
| Split tear, PI (kN/m) | 274 | (48.0) |
| Compression set, % | 34 | |
| Water absorption, 24 hrs at 70°C, % | 0.5 | |
| Hydrolytic stability % retained tensile strength | 94 | |
| Torsional Rigidity | | |
| $T_f$ °C | -25 | |
| $T_4$ °C | +24 | |

EXAMPLE 31

The polyester polyol of Example 3 was used to prepare a thermoplastic polyurethane elastomer. It was blended with a polyol and reacted with diisocyanate as follows:

| | Equiv. | Grams |
|---|---|---|
| Polyester polyol | 0.34 | 87.5 |
| Modifying polyol Teracol-1000 (a polyoxytetramethylene glycol of MW near 1000) | 0.06 | 32.5 |
| Isonate 143L diisocyanate | 0.41 | 60.0 |

The polyols were blended and degassed under vacuum at 60°C for 30 minutes. After cooling to 24°C vacuum was released and the diisocyanate was added. While blending under vacuum the exotherm of reaction raised the temperature to 72°C. After 15 minutes it was poured into prepared molds and cured for 24 hours at 100°C. Aftering curing the elastomer was conditioned for 7 days at 23°C and 50% relative humidity.

The elastomer had the following properties:

| | |
|---|---|
| Shore hardness | 90 A |
| Tensile strength, psi (mPa) | 6020 (41.5) |
| Elongation, % | 285 |
| Split tear, PI (kN/m) | 258 (45.2) |
| Compression set, % | 87 |
| Water absorption, 24 hrs at 70°C, % | 0.7 |
| Hydrolytic stability, % retained tensile strength | 98 |
| Torsional Rigidity | |
| $T_f$ °C | -8 |
| $T_4$ °C | +17 |

EXAMPLE 32

The polyester polyol of Example 4 was used to prepare a thermoplastic polyurethane elastomer. It was blended with a polyol and reacted with diisocyanate as follows:

| | Equiv. | Grams |
|---|---|---|
| Polyester polyol | 0.28 | 84.6 |
| Modifying polyol 1,4 butanediol | 0.28 | 12.4 |
| Isonate 143L diisocyanate | 0.57 | 83.0 |

The polyols were blended and degassed under vacuum at 60°C for 45 minutes. After cooling to 28°C vacuum was released and the diisocyanate was added. While blending under vacuum the exotherm of reaction raised the temperature to 70°C. After 4 minutes it was poured into prepared molds and cured for 24 hours at 100°C. After curing the elastomer was conditioned for 7 days at 23°C and 50% relative humidity.

The elastomer had the following properties:

| | | |
|---|---|---|
| Shore hardness | 57 D | |
| Tensile strength, psi (mPa) | 4161 | (28.7) |
| Elongation, % | 165 | |
| Split tear, PI (kN/m) | 275 | (48.2) |
| Compression set, % | 80 | |
| Water absorption, 24 hrs at 70°C, % | 0.5 | |
| Hydrolytic stability, % retained tensile strength | 100 | |
| Torsional Rigidity | | |
| $T_f$ °C | -9 | |
| $T_4$ °C | +22 | |

EXAMPLE 33

The polyester polyol of Example 5 was used to prepare a crosslinked polyurethane elastomer. It was blended with a polyol and reacted with diisocyanate as follows:

| | Equiv. | Grams |
|---|---|---|
| Polyester polyol | 0.233 | 100.0 |
| Modifying polyol 1,4 butanediol | 0.233 | 10.5 |
| Isonate 143L diisocyanate | 0.477 | 69.5 |

The polyols were blended and degassed under vacuum at 70°C for 90 minutes. After cooling to 30°C vacuum was released and the diisocyanate was added. While blending under vacuum the exotherm of reaction raised the temperature to 50°C. After 4 minutes it was poured into prepared molds and cured for 24 hours at 100°C. After curing the elastomer was conditioned for 7 days at 23°C and 50% relative humidity.

The elastomer had the following properties:

| | | |
|---|---|---|
| Shore hardness | 94 A | |
| Tensile strength, psi (mPa) | 2420 | (16.7) |
| Elongation, % | 120 | |
| Split tear, PI (kN/m) | 72 | (12.6) |
| Compression set, % | 31 | |
| Water absorption, 24 hrs at 70°C, % | 0.5 | |
| Hydrolytic stability, % retained tensile strength | 34 | |
| Torsional Rigidity | | |
| $T_f$ °C | -22 | |
| $T_4$ °C | +17 | |

EXAMPLE 34

The polyester polyol of Example 6 was used to prepare a crosslinked polyurethane elastomer. It was blended with a polyol and reacted with diisocyanate as follows:

| | Equiv. | Grams |
|---|---|---|
| Polyester polyol | 0.34 | 53.2 |
| Modifying polyol Teracol-1000 | 0.11 | 59.5 |
| Isonate 143L diisocyanate | 0.46 | 67.3 |

The polyols were blended and degassed under vacuum at 70°C for 60 minutes. After cooling to 40°C vacuum was released and the diisocyanate was added. While blending under vacuum the exotherm of reaction raised the temperature to 66°C. After 5 minutes it was poured into prepared molds and cured for 24 hours at 100°C. After curing the elastomer was conditioned for 7 days at 23°C and 50% relative humidity.

The elastomer had the following properties:

| | | |
|---|---|---|
| Shore hardness | 93 A | |
| Tensile strength, psi (mPa) | 2966 | (20.4) |
| Elongation, % | 110 | |
| Split tear, PI (kN/m) | 83 | (14.5) |
| Compression set, % | 21 | |
| Water absorption, 24 hrs at 70°C, % | 1.5 | |
| Hydrolytic stability, % retained tensile strength | 62 | |
| Torsional Rigidity | | |
| $T_f$ °C | -7 | |
| $T_4$ °C | +21 | |

EXAMPLE 35

The polyester polyol of Example 7 was used to prepare a crosslinked polyurethane elastomer. It was blended with a polyol and reacted with diisocyanate as follows:

| | Equiv. | Grams |
|---|---|---|
| Polyester polyol | 0.37 | 81.2 |
| Modifying polyol Teracol-1000 | 0.062 | 33.2 |
| Isonate 143L diisocyanate | 0.45 | 65.6 |

The polyols were blended and degassed under vacuum at 70°C for 60 minutes. After cooling to 43°C vacuum was released and the diisocyanate was added. While blending under vacuum the exotherm of reaction raised the temperature to 68°C. After 5 minutes it was poured into prepared molds and cured for 23 hours at 100°C. After curing the elastomer was conditioned for 7 days at 23°C and 50% relative humidity.

The elastomer had the following properties:

| | | |
|---|---|---|
| Shore hardness | 53 D | |
| Tensile strength, psi (mPa) | 1813 | (12.5) |
| Elongation, % | 60 | |
| Split tear, PI (kN/m) | 46 | (8.1) |
| Compression set, % | 19 | |
| Water absorption, 24 hrs at 70°C, % | 1.0 | |
| Hydrolytic stability, % retained tensile strength | 70 | |
| Torsional Rigidity | | |
| $T_f$ °C | -25 | |
| $T_4$ °C | +26 | |

EXAMPLE 36

The polyester polyol of Example 8 was used to prepare a crosslinked polyurethane elastomer. It was reacted with diisocyanate as follows:

| | Equiv. | Grams |
|---|---|---|
| Polyester polyol | 0.40 | 119.1 |
| Isonate 143L diisocyanate | 0.41 | 60.9 |

The polyol was degassed under vacuum at 70°C for 60 minutes. After cooling to 39°C vacuum was released and the diisocyanate was added. While blending under vacuum the exotherm of reaction raised the temperature to 73°C. After 7 minutes it was poured into prepared molds and cured for 23 hours at 100°C. After curing the elastomer was conditioned for 7 days at 23°C and 50% relative humidity.

The elastomer had the following properties:

| | |
|---|---|
| Shore hardness | 53 D |
| Tensile strength, psi (mPa) | 1560 (10.8) |
| Elongation, % | 50 |
| Split tear, PI (kN/m) | 50 (8.8) |
| Compression set, % | 10 |
| Water absorption, 24 hrs at 70°C, % | 0.5 |
| Hydrolytic stability, % retained tensile strength | 82 |
| Torsional Rigidity | |
| $T_f$ °C | -37 |
| $T_4$ °C | +23 |

EXAMPLE 37

The polyester polyol of Example 9 was used to prepare a crosslinked polyurethane elastomer. It was blended with a polyol and reacted with diisocyanate as follows:

| | Equiv. | Grams |
|---|---|---|
| Polyester polyol | 0.30 | 110.8 |
| Modifying polyol 1,4 butanediol | 0.12 | 5.5 |
| Isonate 143L diisocyanate | 0.43 | 63.8 |

The polyols were blended and degassed under vacuum at 70°C for 60 minutes. After cooling to 42°C vacuum was released and the diisocyanate was added. While blending under vacuum the exotherm of reaction raised the temperature to 70°C. After 4 minutes it was poured into prepared molds and cured for 24 hours at 100°C. After curing the elastomer was conditioned for 7 days at 23°C and 50% relative humidity.

The elastomer had the following properties:

| | | |
|---|---|---|
| Shore hardness | 94 A | |
| Tensile strength, psi (mPa) | 1440 | (9.9) |
| Elongation, % | 55 | |
| Split tear, PI (kN/m) | 41 | (7.2) |
| Compression set, % | 23 | |
| Water absorption, 24 hrs at 70°C, % | 0.5 | |
| Hydrolytic stability, % retained tensile strength | 84 | |
| Torsional Rigidity | | |
| $T_f$ °C | -37 | |
| $T_4$ °C | +17 | |

EXAMPLE 38

The polyester polyol of Example 10 was used to prepare a crosslinked polyurethane elastomer. It was blended with a polyol and reacted with diisocyanate as follows:

| | Equiv. | Grams |
|---|---|---|
| Polyester polyol | 0.25 | 110.0 |
| Modifying polyol 1,4 butanediol | 0.16 | 7.5 |
| Isonate 143L diisocyanate | 0.43 | 62.0 |

The polyols were blended and degassed under vacuum at 70°C for 90 minutes. After cooling to 30°C vacuum was released and the diisocyanate was added. While blending under vacuum the exotherm of reaction raised the temperature to 50°C. After 8 minutes it was poured into prepared molds and cured for 24 hours at 100°C. After curing the elastomer was conditioned for 7 days at 23°C and 50% relative humidity.

The elastomer had the following properties:

| | |
|---|---|
| Shore hardness | 93 A |
| Tensile strength, psi (mPa) | 1480 (10.2) |
| Elongation, % | 75 |
| Split tear, PI (kN/m) | 44 (7.7) |
| Compression set, % | 12 |
| Water absorption, 24 hrs at 70°C, % | 0.5 |
| Hydrolytic stability, % retained tensile strength | 70 |
| Torsional Rigidity | |
| $T_f$ °C | -34 |
| $T_4$ °C | +15 |

EXAMPLE 39

The polyester polyol of Example 11 was used to prepare a crosslinked polyurethane elastomer. It was blended with a polyol and reacted with diisocyanate as follows:

| | Equiv. | Grams |
|---|---|---|
| Polyester polyol | 0.22 | 59.4 |
| Modifying polyol Teracol-1000 | 0.025 | 12.3 |
| Isonate 143L diisocyanate | 0.25 | 37.2 |

The polyols were blended and degassed under vacuum at 70°C for 90 minutes. The vacuum was broken with $N_2$ and the product was cooled to room temperature. The diisocyanate was then added. After degassing under vacuum for 3 minutes, the reaction mixture was poured into prepared molds at a temperature of 35°C. It set 10 minutes after pouring and was cured overnight at 100°C. Aftering curing, the elastomer was conditioned for 7 days at 23°C and 50% relative humidity before testing.

The properties of the polyurethane elastomer were as follows:

| | | |
|---|---|---|
| Tensile strength, psi (mPa) | 1871 | (12.9) |
| Elongation, % | 75 | |
| Split tear, PI (kN/m) | 103 | (18.0) |
| Water absorption, 24 hrs at 70°C, % | 0.8 | |
| Hydrolytic stability, % retained tensile strength | 100 | |
| Torsional Rigidity | | |
| $T_f$ °C | -11 | |
| $T_4$ °C | +14 | |

EXAMPLE 40

The amide diol of Example 12 was reacted with isophorone diisocyanate (IPDI) using 73 wt. % of the diol to 27 wt. % of the isocyanate plus 0.017% of dibutyltin dilaurate (DBTDL) as catalyst. The amide diol was heated with stirring to 70°C under $N_2$ for 15 minutes then degassed under vacuum for 80 minutes. The IPDI was then added after cooling to 50°C and vacuum pulled for 3 minutes at which time the temperature had increased to 70°C. The partially reacted mixture was poured into molds and cured at 100°C for 24 hours.

The polyurethane elastomer thus produced had the following properties:

| | |
|---|---|
| Shore hardness | 89A |
| Tensile strength, psi (mPa) | 1111 (7.7) |
| Elongation, % | 355 |
| Split tear, PI (kN/m) | 134 (23.5) |
| Compression set, % | 45 |
| Water absorption 24 hrs at 70°C, % | 2.0 |
| Hydrolytic stability, % retained tensile strength | 100 |
| Torsional Rigidity | |
| $T_f$ °C | -26 |
| $T_4$ °C | +13 |

## EXAMPLE 41

Using substantially the same technique described in Example 40, the $C_{19}$HME/ethylene diamine amide diol of Example 12 was blended with two modifying polyols, degassed and reacted with isophorone diisocyanate (IPDI) in the presence of dibutyltin dilaurate (DBTDL) catalyst in the following ratio:

| | Equiv. | Grams |
|---|---|---|
| $(C_{19}HME)_2EDA$ | 0.27 | 86.2 |
| Hydroxymethyloctadecanol | 0.15 | 23.2 |
| Bis(hydroxymethyl)octadecanol | 0.10 | 11.7 |
| IPDI | 0.54 | 58.8 |
| DBTDL | | 0.03 |

The polyurethane elastomer had the following properties:

| | |
|---|---|
| Shore hardness | 65 D |
| Tensile strength, psi (mPa) | 5162 (35.6) |
| Elongation, % | 275 |
| Split tear, PI (kN/m) | 447 (78.3) |
| Compression set, % | 30 |
| Water absorption, 24 hrs at 70°C, % | 1.7 |
| Hydrolytic stability, % retained tensile strength | 81 |
| Torsional Rigidity | |
| $T_f$ °C | -9 |
| $T_4$ °C | +29 |

EXAMPLE 42

Using substantially the same technique as described in Example 40, the $C_{19}$HME/bis(aminomethyl) tricyclodecane amide diol of Example 13 was blended with three modifying polyols, degassed and reacted with isophorone diisocyanate in the presence of dibutyltin dilaurate in the following ratio:

| | Equiv. | Grams |
|---|---|---|
| ($C_{19}$HME) BAMTCD | 0.15 | 61.3 |
| Teracol-1000 | 0.075 | 39.9 |
| Hydroxymethyl octadecanol | 0.13 | 19.5 |
| Bis(hydroxymethyl)octadecanol | 0.086 | 5.4 |
| IPDI | 0.45 | 49.5 |
| DBTDL | | 0.0312 |

This polyurethane elastomer had the following properties:

| | | |
|---|---|---|
| Shore hardness | 88 A | |
| Tensile strength, psi (mPa) | 2806 | (19.3) |
| Elongation, % | 365 | |
| Split tear, PI (kN/m) | 154 | (27.0) |
| Compression set, % | 12 | |
| Water absorption, 24 hrs at 70°C, % | 1.4 | |
| Hydrolytic stability, % retained tensile strength | 68 | |
| Torsional Rigidity | | |
| $T_f$ °C | -29 | |
| $T_4$ °C | +12 | |

EXAMPLE 43

Using substantially the same technique described in Example 40, the $C_{19}$HME/hexamethylene diamine amide diol of Example 14 was blended with two copolyols, degassed and reacted with isophorone diisocyanate in the presence of dibutyltin dilaurate in the following ratio:

| | Equiv. | Grams |
|---|---|---|
| $(C_{19}HME)_2HMDA$ | 0.24 | 94.9 |
| Hydroxymethyl octadecanol | 0.14 | 21.1 |
| Bis(hydroxymethyl)octadecanol | 0.092 | 10.6 |
| IPDI | 0.49 | 53.4 |
| DBTDL | | 0.06 |

This polyurethane elastomer had the following properties:

| | |
|---|---|
| Shore hardness | 93 A |
| Tensile strength, psi (mPa) | 1090 (7.5) |
| Elongation, % | 330 |
| Torsional Rigidity | |
| $T_f$ °C | -10 |
| $T_4$ °C | +15 |

EXAMPLE 44

It is generally preferred to prepare the polyester polyols of the invention with an excess of polyol reactant as exemplified by this Example.

1.0 mole of $C_{19}$HME and 5.0 moles of urethane grade 1,4-butanediol plus butyltin tris(2-ethylhexoate) at 50 ppm Sn per $C_{19}$HME were heated and stirred in a reactor fitted with a short vigreaux column. At 200°C methanol began to evolve and continued to evolve for 1.5 hours while the temperature in the pot rose to 220°C. A sample of the reaction mixture was taken and analyzed by gas chromatography indicating that essentially all of the $C_{19}$HME had reacted. The product was stripped under 0.2 mm Hg vacuum at 108-120°C until all excess 1,4-butanediol was removed. A 1/1 ester diol of the formula:

$$CH_3-(CH_2)_m-\underset{\displaystyle\phantom{|}}{\overset{\overset{\displaystyle CH_2OH}{|}}{CH}}-(CH_2)_n-\overset{\overset{\displaystyle O}{\|}}{C}-O(CH_2)_4OH$$

where m is 8 or 7 and n is 7 or 8, respectively

was obtained in high yield together with a small amount of 2/1 diester diol of the formula:

$$CH_3-(CH_2)_m-\overset{\overset{\displaystyle CH_2OH}{|}}{CH}-(CH_2)_n-\overset{\overset{\displaystyle O}{\|}}{C}-O(CH_2)_4-O\overset{\overset{\displaystyle O}{\|}}{C}-(CH_2)_n-\overset{\overset{\displaystyle CH_2OH}{|}}{CH}-(CH_2)_mCH_3$$

where m is 8 or 7 and n is 7 or 8, respectively.

This product had a hydroxyl equivalent weight of 214 and a viscosity of 3.7 poise at 23°C.

## EXAMPLE 45

An ester diol made as described in Example 44 was blended with modifying polyols and reacted with modified diphenyl methane diisocyanate (Isonate 143L) according to the following ratio:

| | Equiv. | Grams |
|---|---|---|
| ($C_{19}$HME)BD | 0.172 | 66.39 |
| Hydroxymethyl octadecanol | 0.147 | 22.41 |
| Bis(hydroxymethyl)octadecanol | 0.098 | 11.30 |
| Isonate 143L | 0.517 | 76.0 |

The polyols were degassed under vacuum at 65°C for 2.5 hours. The diisocyanate was added, the reactants degassed 4 minutes under vacuum and then poured into molds and cured 24 hours at 100°c.

After conditioning six days at 23°C and 50% relative humidity, the polyurethane elastomer had the following properties:

| | | |
|---|---|---|
| Shore hardness | 56 D | |
| Tensile strength, psi (mPa) | 3579 | (24.7) |
| Elongation, % | 160 | |
| Split tear, PI (kN/m) | 241 | (42.2) |
| Compression set, % | 21 | |
| Water absorption, 24 hrs at 70°C, % | 0.2 | |
| Hydrolytic stability, % retained tensile strength | 100 | |
| Torsional Rigidity | | |
| $T_f$ °C | -8 | |
| $T_4$ °C | +25 | |

EXAMPLE 46

To 601.78 grams of Sunlite brand sunflower oil were added 2.96 grams of catalyst (5% Rh on C) and 3.44 grams of tris(3-diethylaminopropyl) phosphine. The materials were purged with $N_2$ and $H_2$ and reacted with $H_2$/CO for 5 3/4 hours at 16°C → 123°C under 1200-1265 psi (8.3-8.7mPa) gas pressure. The catalyst was extracted with Amberlyst 15 in tetrahydrofuran and filtered.

The hydroformylated sunflower oil was hydrogenated using a nickel catalyst at 140-150°C, 890-910 (6.14-6.27 mPa), for three hours. The polyhydroxymethyl sunflower oil which resulted had a hydroxyl equivalent weight of 276.2.

To 99.2 grams (0.359 equivalents) of the polyhydroxymethyl sunflower oil was added 23.5 grams (0.024 equivalents) of Teracol 2000 (polyoxytetramethylene glycol) as a co-polyol. These were degassed by stirring under vacuum at 70°C for 30 minutes. To the degassed polyol mixture was added 57.2 grams (0.393 equivalents) of Isonate 143L. This blend of reactants were stirred under vacuum for 3 minutes at 40°C and poured into prepared molds and cured for 24 hours at 110°C. It required 8 minutes to become solid at this temperature.

The polyrethane elastomer so produced had the following properties:

| | |
|---|---|
| Shore hardness | 55 D |
| Tensile strength, psi (mPa) | 1192 (8.2) |
| Elongation, % | 55 |
| Split tear, PI (kN/m) | 83 (14.5) |
| Compression set, % | 66 |
| Water absorption, 24 hrs at 70°C, % | 0.76 |

| | |
|---|---|
| Hydrolytic stability, % retained tensile strength | 94 |
| Torsional Rigidity | |
| $T_f$ °C | -10 |
| $T_4$ °C | +19 |

EXAMPLE 47

To 117 grams (0.42 equivalents) of the polyhydroxymethyl sunflower oil were added 63 grams, 0.43 equivalents of Isonate 143L and the reactants stirred 2 minutes under vacuum at 40°C before being poured into molds and curing 24 hours at 110°C. The gel time on this product was 5 minutes.

The polyurethane elastomer so produced had the following properties:

| | | |
|---|---|---|
| Shore hardness | 72 D | |
| Tensile strength, psi (mPa) | 3738 | (25.8) |
| Elongation, % | 20 | |
| Split tear, PI (kN/m) | 177 | (31.0) |
| Compression set, % | 8.1 | |
| Water absorption, 24 hrs at 70°C, % | 0.49 | |
| Hydrolytic stability, % retained tensile strength | 78 | |
| Torsional Rigidity | | |
| $T_f$ °C | -21 | |
| $T_4$ °C | +36 | |

EXAMPLE 48

A urethane elastomer was prepared from the alkoxylated diol of Example 23. The alkoxylated diol was blended with a polyol and reacted with diisocyanate as follows:

| | Equiv. | Grams |
|---|---|---|
| Diol of Example 23 | 0.2 | 90.1 |
| Modifying polyol 1,4 butane diol | 0.3 | 13.5 |
| Isonate 143L diisocyanate (a modified diphenylmethane diisocyanate (MDI) containing a high percentage of MDI and a lesser amount of poly carbodiimide adducts) | 0.5125 | 74.6 |

The diols were degassed under vacuum at 70-80°C, cooled to 25°C and the Isonate 143L added. Vacuum was again applied for 6 minutes during which the heat of exothermic reaction raised the temperature to 70°C at which time the reaction mix was poured into molds and cured for 20 hours at 100°C.

The elastomer had the following properties:

| | |
|---|---|
| Shore hardness | 48 D |
| Tensile strength, psi (mPa) | 2790 (19.2) |
| Elongation, % | 220 |
| Split tear, PI (kN/m) | 509 (89.1) |
| Compression set, % | 100 |
| Water absorption, 24 hrs at 70°C, % | 0.8 |
| Hydrolytic stability, % retained tensile strength | 100 |
| Torsional Rigidity | |
| $T_f$ °C | -20 |
| $T_4$ °C | +26 |

## EXAMPLE 49

An elastomer was prepared from the diol of Example 24 modifying with other diols in the amounts indicated. The method was essentially that of Example 48.

| | Equiv. | Grams |
|---|---|---|
| Diol of Example 24 | 0.21 | 89.2 |
| 1,4 butane diol | 0.08 | 3.6 |
| Hydroxymethyl octadecanol | 0.16 | 11.1 |
| Bis(hydroxymethyl)octadecanol | 0.11 | 5.9 |
| Isonate 143L | 0.56 | 38.8 |

The elastomer had the following properties:

| | |
|---|---|
| Shore hardness | 56 D. |
| Tensile strength, psi (mPa) | 3697 (25.5) |
| Elongation, % | 185 |
| Split tear, PI (kN/m) | 216 (37.8) |
| Compression set, % | 54 |
| Water absorption, 24 hrs at 70°C, % | 0.8 |
| Hydrolytic stability, % retained tensile strength | 100 |
| Torsional Rigidity | |
| $T_f$ °C | -13 |
| $T_4$ °C | +29 |

EXAMPLE 50

An elastomer was prepared from the following ingredients in the amounts indicated, using the method of Example 48

| | Equiv. | Grams |
|---|---|---|
| Diol of Example 25 | 0.164 | 74.75 |
| 1,4 butane diol | 0.41 | 18.45 |
| Isonate 143L | 0.588 | 47.90 |

The elastomer had the following properties:

| | |
|---|---|
| Shore hardness | 58 D |
| Tensile strength, psi (mPa) | 3006 (20.7) |
| Elongation, % | 200 |
| Split tear, PI (kN/m) | 242 (42.4) |
| Compression set, % | 87 |
| Water absorption, 24 hrs at 70°C, % | 0.5 |
| Hydrolytic stability, % retained tensile strength | 100 |
| Torsional Rigidity | |
| $T_f$ °C | -25 |
| $T_4$ °C | +51 |

EXAMPLE 51

An elastomer was prepared from the following ingredients in the amounts indicated, using the method of Example 48

| | Equiv. | Grams |
|---|---|---|
| Diol of Example 26 | 0.36 | 109.0 |
| Teracol 1000 (polyoxytetra-methylene glycol MW near 1000) | 0.024 | 12.9 |
| Isonate 143L | 0.40 | 58.0 |

In this example a long chain softening diol, Teracol 1000, was needed to bring the hardness within the desired range.

The elastomer had the following properties:

| | | |
|---|---|---|
| Shore hardness | 47 D | |
| Tensile strength, psi (mPa) | 3627 | (25.0) |
| Elongation, % | 325 | |
| Split tear, PI (kN/m) | 284 | (49.7) |
| Compression set, % | 88 | |
| Water absorption, 24 hrs at 70°C, % | 1.0 | |
| Hydrolytic stability, % retained tensile strength | 99 | |
| Torsional Rigidity | | |
| $T_f$ °C | -5 | |
| $T_4$ °C | +18 | |

EXAMPLE 52

An elastomer was prepared from the following ingredients in the amounts indicated, using the method of Example 48.

| | Equiv. | Grams |
|---|---|---|
| Triol of Example 26 | 0.36 | 66.1 |
| Teracol 1000 | 0.089 | 47.4 |
| Isonate 143L | 0.46 | 68.5 |

The elastomer had the following properties:

| | |
|---|---|
| Shore hardness | 42 D |
| Tensile strength, psi (mPa) | 2522 (17.4) |
| Elongation, % | 135 |
| Split tear, PI (kN/m) | 51 (8.9) |
| Compression set, % | 27 |
| Water absorption, 24 hrs at 70°C, % | 1.4 |
| Hydrolytic stability, % retained tensile strength | 55 |
| Torsional Rigidity | |
| $T_f$ °C | -23 |
| $T_4$ °C | +14 |

EXAMPLE 53

An elastomer was prepared from the following ingredients in the amounts indicated, using the method of Example 48.

| | Equiv. | Grams |
|---|---|---|
| Tetrol of Example 27 | 0.12 | 72.24 |
| 1,4 butane diol | 0.48 | 21.60 |
| Isonate 143L | 0.615 | 89.48 |

The elastomer had the following properties:

| | |
|---|---|
| Shore hardness | 56 D |
| Tensile strength, psi (mPa) | 1403 (9.7) |
| Elongation, % | 30 |
| Split tear, PI | - |
| Compression set, % | 66 |
| Water absorption, 24 hrs at 70°C, % | 0.2 |
| Hydrolytic stability, % retained tensile strength | 100 |
| Torsional Rigidity | |
| $T_f$ °C | -52 |
| $T_4$ °C | +18 |

Claims:

1. Non-gelling polyols of formula I

$$R \{ X(A)_{\alpha}H]_{p} \qquad (I)$$

(wherein R represents a polyol, polyamine or aminoalcohol residue; p is an integer of from 2 to 6; each X, which may be the same or different, represents an oxygen or nitrogen atom or a group >NH; each α, which may be the same or different, is an integer of from 0 to 10, the sum of all α's being greater than 0; and each A, which may the same or different, represents a group of formula $A_1$, $A_3$

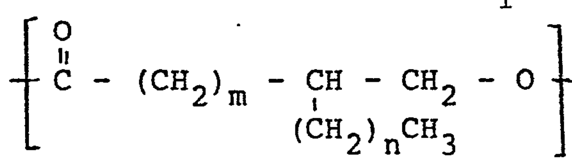

($A_1$)

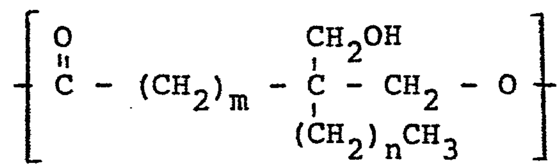

($A_3$)

[wherein m and n are integers; m is greater than 3; n is greater than or equal to 0; and the sum of m and n is from 11 to 19]

or $A_2$

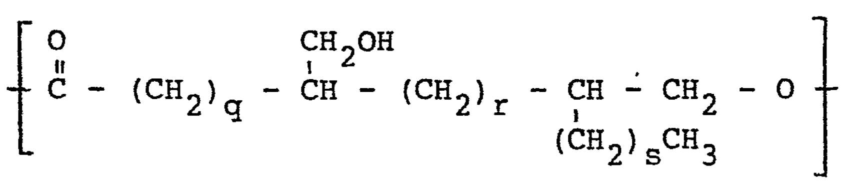

($A_2$)

[wherein q, r and s are integers; q is greater than 3; r and s, which may be the same or different are each greater than or equal to 0; and the sum of q, r and s is from 10 to 18]; with the proviso that where each X represents an oxygen atom, p

is 3, each A is $A_1$ and each $\alpha$ is 1, then R represents other than the residue of glycerol) and mixtures thereof.

2. Compounds of formula I and mixtures thereof as claimed in claim 1 wherein each X represents an oxygen atom, each A is $A_1$ and R represents the residue of a polyol.

3. Compounds of formula I and mixtures thereof as claimed in either of claims 1 and 2 wherein each X represents an oxygen atom, p is 2 and R represents the residue of a diol.

4. Compounds of formula I and mixtures thereof as claimed in one of the preceding claims wherein R represents the residue of one of the following polyols:

(a) 1,4-butanediol;

(b) 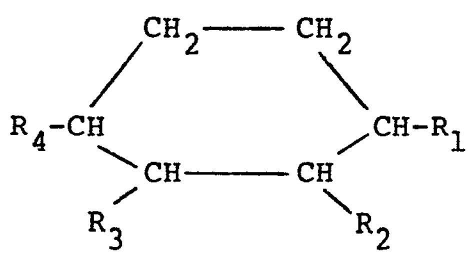 (II)

wherein $R_1$, $R_2$, $R_3$ and $R_4$, which may be the same or different, have a total of from 30 to 38 carbon atoms and each represent a straight-chained alkyl group having at least 5 carbon atoms, and wherein two of $R_1$, $R_2$, $R_3$ and $R_4$ have omega-hydroxyl substituents;

(c) ethylene glycol;

(d) neopentylglycol;

(e) 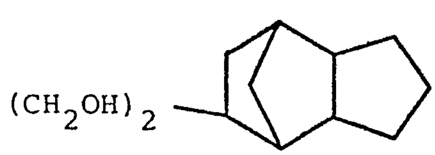 (III);

(f) 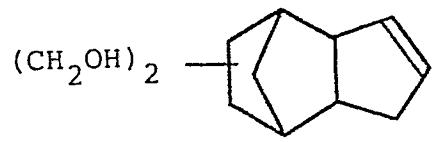 (IV);

(g) $H(CH_2)_hCH(CH_2OH)(CH_2)_kCH_2OH$ (V)
(wherein h and k are non-zero integers the sum of which is from 12 to 20 and k is 3 or greater);

(h) 9(10-hydroxymethyloctadecanol;

(i) 1,4-dishydroxymethylcyclohexane;

(j) 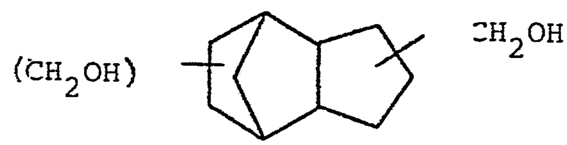 (VI)

(k) triols;

(l) trimethylolpropane;

(m) tetrols;

(n) pentaerythritol;

(o) $CH_3(CH_2)_a[C(CH_2OH)_2]_b(CH_2)_cC(CH_2OH)_2(CH_2)_d$-$[C(CH_2OH)_2]_e(CH_2)_fCH_2OH$ (VII)

(wherein a, b, c, d, e and f are integers the sum of which is from 11 to 19; b and e, which may be the same or different, are 0 or 1; a and f are 3 or greater; and c and d are greater than 0);

(p) 9,9 (10,10)-bishydroxymethyloctadecanol;

(q) 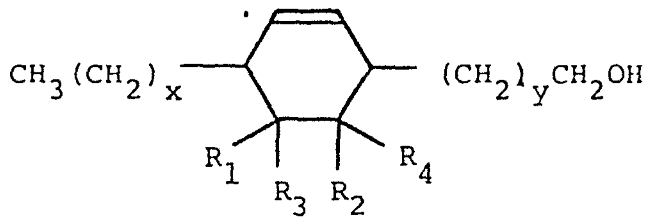 (VIII)

(wherein one of $R_1$ and $R_2$ represents a hydrogen atom and the other represents a hydrogen atom or a methyl group; one of $R_3$ and $R_4$ represents a hydroxymethyl group and the other represents a hydrogen atom or a hydroxymethyl group; x and y are integers the sum of which is 12; x is an integer of from 3 to 6; and y is an integer of from 6 to 9);

(r) 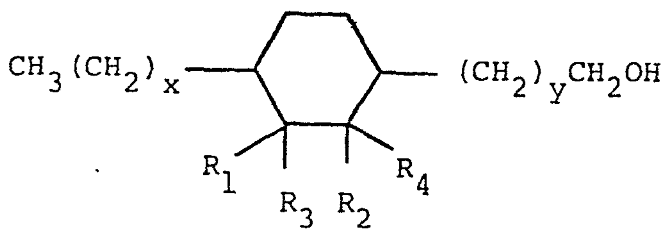 (IX)

(wherein one of $R_1$ and $R_2$ represents a hydrogen atom and the other represents a hydrogen atom or a methyl group; one of $R_3$ and $R_4$ represents a hydroxymethyl group and the other represents a hydrogen atom or a hydroxymethyl group; x and y are integers the sum of which is 12; x is an integer of from 3 to 6; and y is an integer of from 6 to 9); and

(s) polyether polyols;

5. Mixtures of compounds of formula I as claimed in claim 4 wherein R represents the residues of the following polyols:

(a) 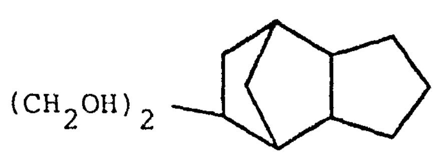 (III)

and 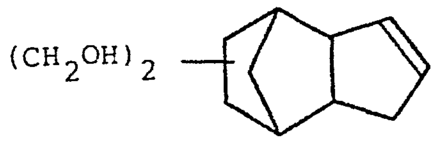 (IV); or

(b) two or more polyols of formula VII (as defined in claim 4(o)); or

(c) two or more polyols of formulae V and VII (as defined in claim 4(g) and (o)); or

(d) two or more polyols of formula VIII and/or IX (as defined in claim 4(r) and (s)).

6. Compounds of formula I and mixtures thereof as claimed in claim 4 wherein R represents the residue of a polyether polyol prepared by the reaction of a polyol with at least one mole of an alkylene oxide per mole of hydroxyl on the polyol.

7. Compounds of formula I and mixtures thereof as claimed in claim 6 wherein R represents the residue of a polyether polyol prepared by the reaction of a polyol with an alkylene oxide wherein

(a) the alkylene oxide is selected from ethylene oxide, propylene oxide and mixtures thereof; and/or

(b) the polyether polyol is the reaction product of from 2 to 10 moles alkylene oxide per mole of hydroxyl on the polyol; and/or

(c) the polyol is a diol; and/or

(d) the polyol is a diol selected from neopentyl glycol, ethylene glycol, 1,4-butanediol, hydroxymethyloctadecanol and cyclohexane dimethanol.

8. Compounds of formula I and mixture thereof as claimed in claim 1 wherein X represents a nitrogen atom or an >NH group and R represents the residue of a polyamine.

9. Compounds of formula I and mixtures thereof as claimed in claim 8 wherein at least one of the following conditions is satisfied

(a) p is 2 and R represents the residue of a diamine;

(b) p is 2 and R represents the residue of ethylene diamine, 1,6-diaminohexane, neopentyldiamine, bis-aminomethyltricyclodecane or bis-aminocyclohexane;

(c) p is 3 and R represents the residue of a triamine;

(d) p is 3 and R epresents the residue of diethylene triamine;

(e) p is 4 and R represents the residue of a tetramine; and

(f) p is 4 and R represents the residue of triethylene tetramine.

10. Compounds of formula I and mixtures thereof as claimed in claim 1, wherein R represents the residue of an aminoalcohol.

11. Compounds of formula I and mixtures thereof as claimed in claim 10 wherein R represents the residue of ethanolamine, diethanolamine or triethanolamine.

12. Compounds of formula I and mixtures thereof as claimed in any one of claims 1 to 11 wherein in each A that is $A_1$ or $A_3$, m and n are either 7 and 8 or 8 and 7 respectively.

13. A process for the preparation of novel non-gelling polyols of formula I

$$R[X(A)_{\alpha}H]_p \qquad (I)$$

(wherein R represents a polyol, polyamine or aminoalcohol residue; p is an integer of from 2 to 6; each X, which may be the same or different, represents an oxygen or nitrogen atom or a group $>NH$; each α, which may be the same or different, is an integer of from 0 to 10, the sum of all α's being greater than 0; and each A, which may the same or different, represents a group of formula $A_1$, $A_3$

$$\left[\overset{O}{\overset{\|}{C}} - (CH_2)_m - \underset{(CH_2)_nCH_3}{\underset{|}{CH}} - CH_2 - O\right] \quad (A_1)$$

$$\left[\overset{O}{\overset{\|}{C}} - (CH_2)_m - \underset{(CH_2)_nCH_3}{\underset{|}{\overset{CH_2OH}{\overset{|}{C}}}} - CH_2 - O\right] \quad (A_3)$$

[wherein m and n are integers; m is greater than 3; n is greater than or equal to 0; and the sum of m and n is from 11 to 19] or $A_2$

$$\left[\overset{O}{\overset{\|}{C}} - (CH_2)_q - \overset{CH_2OH}{\overset{|}{CH}} - (CH_2)_r - \underset{(CH_2)_sCH_3}{\underset{|}{CH}} - CH_2 - O\right] \quad (A_2)$$

[wherein q, r and s are integers; q is greater than 3; r and s, which may be the same or different are each greater than or equal to 0; and the sum of q, r and s is from 10 to 18]; with the proviso that where each X represents an oxygen atom, p is 3, each A is $A_1$ and each α is 1, then R represents other than the residue of glycerol), which process comprises transesterifying a hydroxy ester monomer by reaction with a multifunctional compound having at least two active hydrogens, said multifunctional compound being of formula

$$R(XH)_p$$

(wherein X, R and p are as defined above) and said hydroxy ester monomer being of formula X, XI or XII

$$R''' - \overset{O}{\overset{\|}{C}} - (CH_2)_m - \underset{(CH_2)_nCH_3}{\underset{|}{CH}} - CH_2 - OH \quad (X)$$

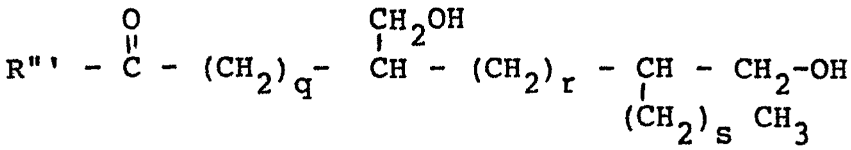 (XI) or

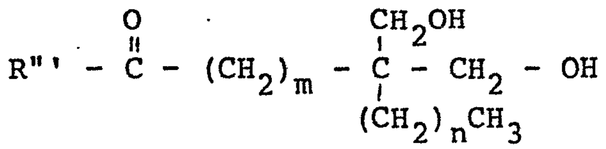 (XII)

(wherein m, n, q, r and s are as defined above and R"' represents a displaceable leaving group capable of forming an alcohol R"'OH).

14. A process as claimed in claim 13 wherein in said hydroxy ester monomer R"' represents a methyl group.

15. Alkoxylated derivatives of compounds of formula I'

$$R[X(A)_{\alpha}H]_p \qquad (I')$$

(wherein R represents a polyol residue;
p is an integer of from 2 to 6;
each X represents an oxygen atom;
each α, which may be the same or different, is an integer of from 0 to 10, the sum of all α's being greater than 0; and
each A, which may the same or different, represents a group of formula $A_1$, $A_3$

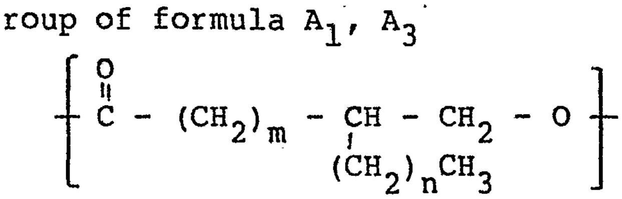 ($A_1$)

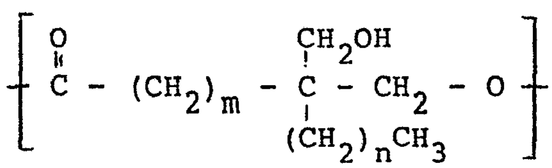 ($A_3$)

[wherein m and n are integers; m is greater than 3; n is greater than or equal to 0; and the sum of m and n is from 11 to 19]

or $A_2$

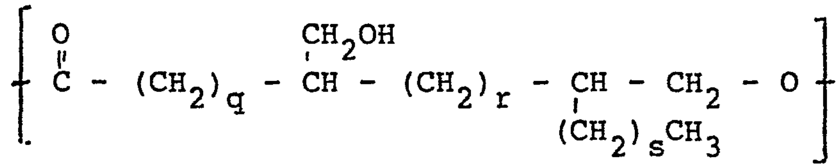 ($A_2$)

[wherein q, r and s are integers; q is greater than 3; r and s, which may be the same or different are each greater than or equal to 0; and the sum of q, r and s is from 10 to 18]) and mixtures thereof formed by reacting at least one compound of formula I' with at least one alkylene oxide in a ratio of moles of alkylene oxide to equivalents of hydroxyl in the compound of formula I' of from about 0.5:1 to 5:1.

16. Alkoxylated derivatives and mixtures thereof as claimed in claim 15 formed by reacting at least one compound of formula I' as claimed in any one of claims 2 to 5 with at least one alkylene oxide.

17. Alkyloxylated derivatives and mixtures thereof as claimed in either of claims 15 and 16 formed by reacting at least one compound of formula I' (as defined in claim 15) with at least one alkylene oxide selected from ethylene oxide and propylene oxide.

18. Alkoxylated derivatives and mixtures thereof as claimed in any one of claims 15 to 17 formed by reacting at least one compound of formula I' (as defined in claim 15) with at least one alkylene oxide in a ratio of moles of alkylene oxide to equivalents of hydroxyl in the compound of formula I' of about 1:1.

19. A process for the preparation of novel alkoxylated derivatives of polyols, which process comprises reacting at least one polyol of formula I' (as defined in claim 15) with at least one alkylene oxide in a ratio of moles of alkylene oxide to equivalents of hydroxyl in the compound of formula

I' of from about 0.5:1 to 5:1.

20. The use of non-gelling polyols of formula I as claimed in any one of claims 1 to 12 or alkoxylated derivatives of polyols as claimed in any one of claims 15 to 18 or mixtures thereof in the preparation of urethane linked reaction products by reaction with polyisocyanates.

21. Urethane linked reaction products of at least one non-gelling polyol of formula I as claimed in any one of claims 1 to 12 or alkoxylated derivative as claimed in any one of claims 15 to 18 and from about 80% to about 120% on a hydroxyl-isocyanate equivalent basis of at least one polyisocyanate.

22. Urethane linked reaction products as claimed in claim 21 in the form of (a) an elastomer, (b) a microcellular foam, (c) a protective coating or (d) an adhesive.

23. Urethane linked reaction products as claimed in either of claims 21 and 22 further containing one or more modifying agents selected from fillers, dyes and plasticizers.

24. A process for the preparation of urethane linked reaction products which process comprises reacting at least one non-gelling polyol of formula I as claimed in any one of claims 1 to 12 or alkoxylated derivative as claimed in any one of claims 15 to 18 or a mixture thereof with from about 80% to about 120% on a hydroxyl-isocyanate equivalent basis of at least one polyisocyanate.

25. A process as claimed in claim 24 wherein said polyol or alkoxylated derivative or mixture thereof is reacted with from about 95% to about 105% on a hydroxyl-isocyanate equivalent basis of said polyisocyanate.

26. A process as claimed in either of claims 24 and 25 wherein said at least one polyisocyanate is at least one of the following:

(a) a diisocyanate, a triisocyanate or a mixture thereof;

(b) an aromatic, aliphatic or cycloaliphatic polyisocyanate; and

(c) a polyisocyanate selected from toluene diisocyanate, xylene diisocyanate, isophorone diisocyanate, hexamethylene diisocyanate, the triisocyanate adduct of hexamethylene diisocyanate and water, trimethyl hexamethylene diisocyanate, diphenylmethane diisocyanate, aliphatic diisocyanates having 12 to 40 carbon atoms in the aliphatic moiety, and mixtures thereof.

27. A process as claimed in any one of claims 24 to 26 wherein said urethane linked reaction product is produced by reacting said polyisocyanate with said polyol of formula I or alkoxylated derivative or mixture thereof together with at least one modifying polyol.

28. A process as claimed in claim 27 wherein said modifying polyol is selected from alkyl and cycloalkyl polyols, ester-linked polyols, ether linked polyols, ester and ether linked polyols and hydroxy functional acrylic copolymers.

Austrian Claims:

1. A process for the preparation of novel non-gelling polyols of formula I

$$R\{X(A)_{\alpha}H\}_p \qquad (I)$$

(wherein R represents a polyol, polyamine or aminoalcohol residue; p is an integer of from 2 to 6; each X, which may be the same or different, represents an oxygen or nitrogen atom or a group $>NH$; each α, which may be the same or different, is an integer of from 0 to 10, the sum of all α's being greater than 0; and each A, which may the same or different, represents a group of formula $A_1$, $A_3$

$$\left[ \overset{O}{\overset{\|}{C}} - (CH_2)_m - \underset{(CH_2)_nCH_3}{\underset{|}{CH}} - CH_2 - O \right] \qquad (A_1)$$

$$\left[ \overset{O}{\overset{\|}{C}} - (CH_2)_m - \overset{CH_2OH}{\overset{|}{\underset{(CH_2)_nCH_3}{\underset{|}{C}}}} - CH_2 - O \right] \qquad (A_3)$$

[wherein m and n are integers; m is greater than 3; n is greater than or equal to 0; and the sum of m and n is from 11 to 19]

or $A_2$

$$\left[ \overset{O}{\overset{\|}{C}} - (CH_2)_q - \overset{CH_2OH}{\overset{|}{CH}} - (CH_2)_r - \underset{(CH_2)_sCH_3}{\underset{|}{CH}} - CH_2 - O \right] \qquad (A_2)$$

[wherein q, r and s are integers; q is greater than 3; r and s, which may be the same or different are each greater than or equal to 0; and the sum of q, r and s is from 10 to 18]; with the proviso that where each X represents an oxygen atom, p is 3, each A is $A_1$ and each α is 1, then R represents other than the residue of glycerol), which process

comprises transesterifying a hydroxy ester monomer by reaction with a multifunctional compound having at least two active hydrogens, said multifunctional compound being of formula

$$R(XH)_p$$

(wherein X, R and p are as defined above) and said hydroxy ester monomer being of formula X, XI or XII

$$R''' - \overset{O}{\overset{\|}{C}} - (CH_2)_m - \underset{(CH_2)_nCH_3}{\underset{|}{CH}} - CH_2 - OH \qquad (X)$$

$$R''' - \overset{O}{\overset{\|}{C}} - (CH_2)_q - \overset{CH_2OH}{\overset{|}{CH}} - (CH_2)_r - \underset{(CH_2)_s\ CH_3}{\underset{|}{CH}} - CH_2-OH \qquad (XI)\ \text{or}$$

$$R''' - \overset{O}{\overset{\|}{C}} - (CH_2)_m - \underset{(CH_2)_nCH_3}{\underset{|}{\overset{CH_2OH}{\overset{|}{C}}}} - CH_2 - OH \qquad (XII)$$

(wherein m, n, q, r and s are as defined above and R"' represents a displaceable leaving group capable of forming an alcohol R"'OH).

2. A process as claimed in claim 1 wherein in said hydroxy ester monomer R"' represents a methyl group.

3. A process as claimed in either of claims 1 and 2 wherein said hydroxy ester monomer is of formula X or XII (as defined in claim 1) and m and n are 7 and 8 or 8 and 7 respectively.

4. A process as claimed in any one of claims 1 to 3 wherein said multifunctional compound is a polyol.

5. A process as claimed in claim 4 wherein said polyol is selected from

(a) 1,4-butanediol;

(b) 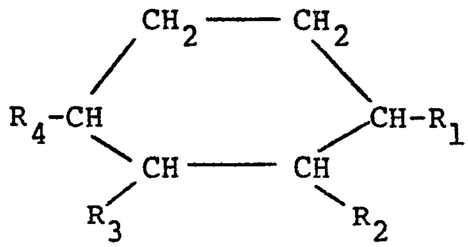 (II)

wherein $R_1$, $R_2$, $R_3$ and $R_4$, which may be the same or different, have a total of from 30 to 38 carbon atoms and each represent a straight-chained alkyl group having at least 5 carbon atoms, and wherein two of $R_1$, $R_2$, $R_3$ and $R_4$ have omega-hydroxyl substituents;

(c) ethylene glycol;

(d) neopentylglycol;

(e) 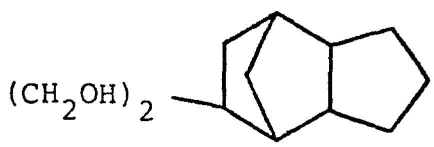 (III);

(f) 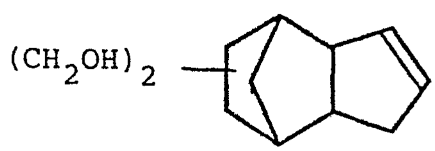 (IV);

(g) $H(CH_2)_hCH(CH_2OH)(CH_2)_kCH_2OH$ (V)
(wherein h and k are non-zero integers the sum of which is from 12 to 20 and k is 3 or greater);

(h) 9(10-hydroxymethyloctadecanol;

(i) 1,4-dishydroxymethylcyclohexane;

(j) 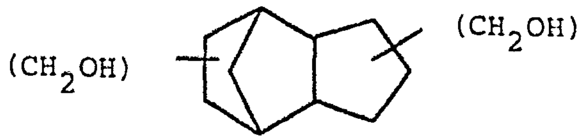 (VI)

(k) triols;

(l) trimethylolpropane;

(m) tetrols;

(n) pentaerythritol;

(o) $CH_3(CH_2)_a[C(CH_2OH)_2]_b(CH_2)_cC(CH_2OH)_2(CH_2)_d$-$[C(CH_2OH)_2]_e(CH_2)_fCH_2OH$ (VII)

(wherein a, b, c, d, e and f are integers the sum of which is from 11 to 19; b and e, which may be the same or different, are 0 or 1; a and f are 3 or greater; and c and d are greater than 0);

(p) 9,9 (10,10)-bishydroxymethyloctadecanol;

(q) 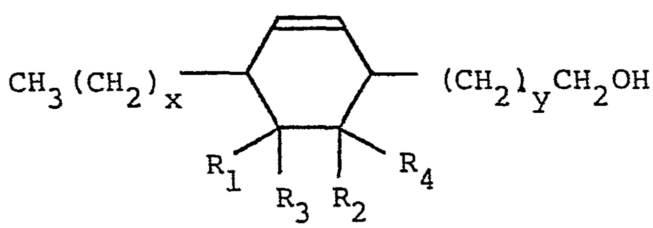 (VIII)

(wherein one of $R_1$ and $R_2$ represents a hydrogen atom and the other represents a hydrogen atom or a methyl group; one of $R_3$ and $R_4$ represents a hydroxymethyl group and the other represents a hydrogen atom or a hydroxymethyl group; x and y are integers the sum of which is 12; x is an integer of from 3 to 6; and y is an integer of from 6 to 9);

(r) 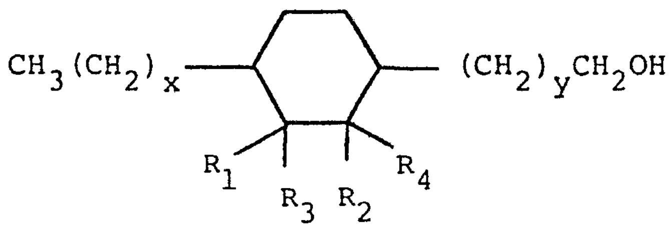 (IX)

(wherein one of $R_1$ and $R_2$ represents a hydrogen atom and the other represents a hydrogen atom or a methyl group; one of $R_3$ and $R_4$ represents a hydroxymethyl group and the other represents a hydrogen atom or a hydroxymethyl group; x and y are integers the sum of which is 12; x is an integer of from 3 to 6; and y is an integer of from 6 to 9); and

(s) polyether polyols;

6. A process as claimed in claim 4 wherein said hydroxy ester compound is reacted with a mixture of polyols comprising:

(a) 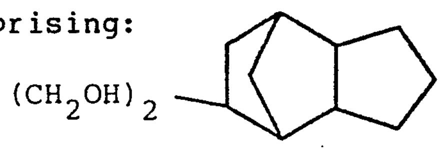 (III)

and 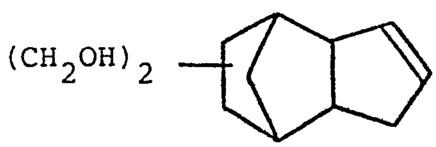 (IV); or

(b) two or more polyols of formula VII (as defined in claim 3(o)); or

(c) two or more polyols of formulae V and VII (as defined in claim 3(g) and (o)); or

(d) two or more polyols of formula VIII and/or IX (as defined in claim 3(r) and (s)).

7. A process as claimed in any one of claims 1 to 3 wherein said multifunctional compound is a polyether polyol prepared by the reaction of a polyol with at least one mole of an alkylene

oxide per mole of hydroxyl on the polyol.

8. A process as claimed in claim 7 wherein said multifunctional compound is a polyether polyol prepared by the reaction of a polyol with an alkylene oxide wherein

(a) the alkylene oxide is selected from ethylene oxide, propylene oxide and mixtures thereof; and/or

(b) the polyether polyol is the reaction product of from 2 to 10 moles alkylene oxide per mole of hydroxyl on the polyol; and/or

(c) the polyol is a diol; and/or

(d) the polyol is a diol selected from neopentyl glycol, ethylene glycol, 1,4-butanediol, hydroxymethyloctadecanol and cyclohexane dimethanol.

9. A process as claimed in any one of claims 1 to 3 wherein said multifunctional compound is a polyamine.

10. A process as claimed in claim 9 wherein said polyamine is selected from:

(a) diamines;

(b) ethylene diamine, 1,6-diaminohexane, neopentyldiamine, bis-aminomethyltricyclodecane and bis-aminocyclohexane;

(c) triamines;

(d) diethyltriamine;

(e) tetramines; and

(f) triethylene tetramine.

11. A process as claimed in any one of claims 1 to 3 wherein said multifunctional compound is an aminoalcohol.

12. A process as claimed in claim 11 wherein said aminoalcohol is selected from ethanolamine, diethanolamine and triethanolamine.

13. A process for the preparation of novel alkoxylated derivatives of compounds of formula I'

$$R[X(A)_{\alpha}H]_{p} \qquad (I')$$

(wherein R represents a polyol residue;

p is an integer of from 2 to 6;
each X represents an oxygen atom;
each α, which may be the same or different, is an integer of from 0 to 10, the sum of all α's being greater than 0; and
each A, which may the same or different, represents a group of formula $A_1$, $A_3$

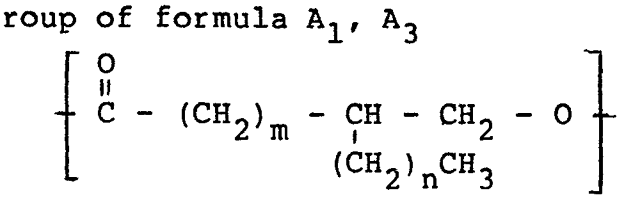

($A_1$)

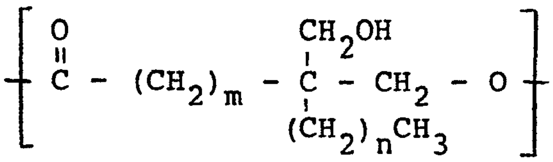

($A_3$)

[wherein m and n are integers; m is greater than 3; n is greater than or equal to 0; and the sum of m and n is from 11 to 19]
or $A_2$

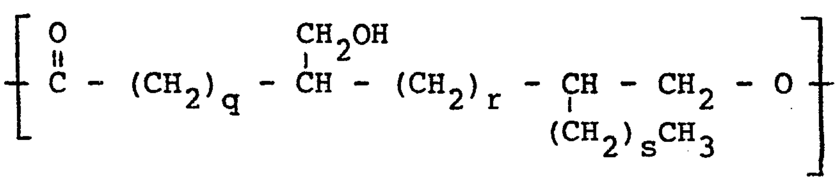

($A_2$)

[wherein q, r and s are integers; q is greater than 3; r and s, which may be the same or different are each greater than or equal to 0; and the sum of q, r and s is from 10 to 18]) and mixtures thereof which process comprises reacting at least one compound of formula I' (as defined herein) with at least one alkylene oxide in a ratio of moles of alkylene oxide to equivalents of hydroxyl in the compound of formula I' of from about 0.5:1 to 5:1.

14. A process as claimed in claim 13 wherein said at least one compound of formula I' comprises a compound as produced by a process as claimed in any one of claims 4 to 6.

15. a process as claimed in either of claims 13 and 14 wherein said at least one alkylene oxide comprises ethylene oxide, propylene oxide or a mixture thereof.

16. A process as claimed in any one of claims 13 to 15 wherein said compound of formula I' is reacted with said alkylene oxide in a ratio of moles of alkylene oxide to equivalents of hydroxyl in the compound of formula I' of about 1:1.

17. The use of non-gelling polyols of formula I (as defined in claim 1) or alkoxylated derivatives produced by a process as claimed in any one of claims 13 to 16 or mixtures thereof in the preparation of urethane linked reaction products by reaction with polyisocyanates.

18. A process for the preparation of urethane linked reaction products which process comprises reacting a non-gelling polyol of formula I (as defined in claim 1) or an alkoxylated derivative produced according to a process as claimed in any one of claims 13 to 16 or a mixture of two or more thereof with from about 80% to about 120% on a hydroxyl-isocyanate equivalent basis of at least one polyisocyanate.

19. A process as claimed in claim 18 wherein said polyol or alkoxylated derivative or mixture thereof is reacted with from about 95% to about 105% on a hydroxy-isocyanate equivalent basis of said polyisocyanate.

20. A process as claimed in either of claims 18 and 19 wherein said at least one polyisocyanate is at least one of the following:

(a) a diisocyanate, a triisocyanate or a mixture thereof;

(b) an aromatic, aliphatic or cycloaliphatic polyisocyanate; and

(c) a polyisocyanate selected from toluene diisocyanate, xylene diisocyanate, isophorone diisocyanate, hexamethylene diisocyanate, the triisocyanate adduct of hexamethylene diisocyanate and water, trimethyl hexamethylene diisocyanate, diphenylmethane diisocyanate, aliphatic diisocyanates having 12 to 40 carbon atoms in the aliphatic moiety, and mixtures thereof.

21. A process as claimed in any one of claims 18 to 20 wherein said urethane linked reaction product is produced by reacting said polyisocyanate with said polyol of formula I or alkoxylated derivative or mixture thereof together with at least one modifying polyol.

22. A process as claimed in claim 21 wherein said modifying polyol is selected from alkyl and cycloalkyl polyols, ester-linked polyols, ether linked polyols, ester and ether linked polyols and hydroxy functional acrylic copolymers.

23. The use of urethane linked reaction products produced according to a proces as claimed in any one of claims 18 to 22 as elastomers, microcellular foams, protective coatings or adhesives.